# EUROPÄISCHE PATENTSCHRIFT

(11) **EP 1 059 225 B1**
(45) Veröffentlichungstag und Bekanntmachung des Hinweises auf die Patenterteilung: **11.06.2008**
(21) Anmeldenummer: 00110148.4
(22) Anmeldetag: 11.05.2000
(51) Int. Cl.: B62D 65/18, B61B 10/02, B05C 3/10, B65G 49/04

(54) **Verfahren und Fördervorrichtung zum Fördern von Fahrzeugkarosserien durch ein Behandlungsbad**
Method and apparatus for conveying vehicle bodies through a processing bath
Procédé et appareillage pour convoyer des carosseries de véhicule à travers un bain de traitement

(30) Priorität: 11.06.1999 DE 19926625
(43) Veröffentlichungstag der Anmeldung: 13.12.2000
(73) Patentinhaber: Dürr Systems GmbH, 70435 Stuttgart (DE)
(72) Erfinder: Besinger, Hartwig, 71729 Erdmannhausen (DE); Lachenmaier, Klaus, 71229 Leonberg (DE); Mogck, Gerhard, 74072 Heilbronn (DE)
(74) Vertreter: Hoeger, Stellrecht & Partner Patentanwälte

(56) Entgegenhaltungen:
- EP-A- 0 610 947
- DE-A- 4 432 352
- DE-A- 19 641 048
- GB-A- 2 229 381
- US-A- 5 110 440

## Beschreibung

Die vorliegende Erfindung betrifft ein Verfahren zum Fördern von Fahrzeugkarosserien durch ein Behandlungsbad zur Oberflächenbehandlung der Fahrzeugkarosserien.

Ferner betrifft die vorliegende Erfindung eine Behandlungsvorrichtung zur Oberflächenbehandlung von Fahrzeugkarosserien, umfassend ein Behandlungsbad zur Oberflächenbehandlung der Fahrzeugkarosserien und eine Fördervorrichtung zum Fördern von Fahrzeugkarosserien durch das Behandlungsbad zur Oberflächenbehandlung der Fahrzeugkarosserien, umfassend einen Förderer, der die Fahrzeugkarosserien in das Behandlungsbad einbringt, durch das Behandlungsbad fördert und aus dem Behandlungsbad wieder ausbringt.

Ein solches Verfahren und eine solche Vorrichtung sind beispielsweise aus der DE 36 12 128 A1 bekannt. Bei dem aus dieser Druckschrift bekannten Verfahren werden die auf Tragschlitten (im folgenden als Skidrahmen bezeichnet) montierten Fahrzeugkarosserien mit Hilfe von schwingend aufgehängten Tragelementepaaren, die jeweils aus zwei einander gegenüberliegenden L-förmigen Armen gebildet sind, an einer Förderstraße eingehängt, mit der die Fahrzeugkarosserien durch eine Phosphatierungs- und Lackierungsanlage gefördert werden.

Das Eintauchen der Fahrzeugkarosserien in das Phosphatierungs- und das Lackierungsbad erfolgt dadurch, dass die Tragelementepaare mit den daran aufgehängten Fahrzeugkarosserien längs eines schrägen Förderabschnitts der Förderstraße in das betreffende Behandlungsbad hinein gefördert werden. Dabei taucht zuerst eine Bodengruppe der jeweiligen Fahrzeugkarosserie in das Behandlungsbad ein. Da die Bodengruppe einer Fahrzeugkarosserie der Flüssigkeit aus dem Behandlungsbad nur kleine Eintrittsquerschnitte zum Eindringen in den Innenraum der Fahrzeugkarosserie bietet, muß zum Eintauchen der Fahrzeugkarosserie in das Behandlungsbad ein hoher Gegendruck (Eintauchwiderstand) überwunden werden.

Ferner verläßt beim Austauchen der Fahrzeugkarosserie aus dem Behandlungsbad die Bodengruppe der Fahrzeugkarosserie das Behandlungsbad zuletzt. Dabei kann es vorkommen, daß die Flüssigkeit des Behandlungsbades aus dem Innenraum der Fahrzeugkarosserie nur unvollständig ausläuft oder beim Auslaufen der Flüssigkeit nach Verlassen des Behandlungsbads störende Markierungen zurückbleiben.

Ferner ist aus der DE 196 41 048 A1 ein Verfahren und eine Vorrichtung bekannt, bei welcher Fahrzeugkarosserien durch Überlagerung einer translatorischen Bewegung und einer Drehbewegung am Anfang eines Behandlungsbades in das Behandlungsbad eingetaucht und am Ende des Behandlungsbades durch eine ebensolche Überlagerung von Translations- und Drehbewegung aus dem Behandlungsbad herausbewegt werden. Wegen der Überlagerung der Translationsbewegung der Fahrzeugkarosserien mit einer Drehbewegung am Anfang und am Ende des Behandlungsbades muß die Tiefe des Behandlungsbades größer gewählt werden als dies bei dem Verfahren gemäß der DE 36 12 128 A1 erforderlich ist. Außerdem ergeben sich durch die Überlagerung der Translations- und der Drehbewegung höhere Strömungsgeschwindigkeiten der Flüssigkeit des Behandlungsbades relativ zu der eintauchenden oder austauchenden Fahrzeugkarosserie, was eine größere mechanische Belastung der Fahrzeugkarosserie und ihrer Halterung zur Folge hat. Insbesondere müssen an der Fahrzeugkarosserie vorgesehene Halteelemente, durch die Türen, Motorhaube und Kofferraumdeckel bzw. Heckklappe der Fahrzeugkarosserie während der Oberflächenbehandlung in einem leicht geöffneten Zustand gehalten werden, stabiler ausgebildet werden.

Aus der DE 44 32 352 A ist ein Verfahren und eine Vorrichtung zum Fördern von Fahrzeugkarosserien durch ein Behandlungsbad zur Oberflächenbehandlung der Fahrzeugkarosserien bekannt, wobei die Fahrzeugkarosserien vor dem Behandlungsbad in eine Kopfüberstellung überführt, über das Behandlungsbad gehoben, senkrecht nach unten in das Behandlungsbad eingefahren, nach einer vorbestimmten Zeit senkrecht nach oben aus dem Behandlungsbad herausgehoben und nach dem Behandlungsbad in eine Standardstellung zurück überführt werden.

Der vorliegenden Erfindung liegt die Aufgabe zugrunde, ein Verfahren der eingangs genannten Art zu schaffen, bei dem die Flüssigkeit des Behandlungsbades den eintauchenden Fahrzeugkarosserien nur einen geringen Eintauchwiderstand entgegensetzt und die Strömungsgeschwindigkeiten der Flüssigkeit des Behandlungsbades relativ zu den eintauchenden und austauchenden Fahrzeugkarosserien niedrig gehalten werden.

Diese Aufgabe wird bei einem Verfahren mit den Merkmalen des Oberbegriffs von Anspruch 1 erfindungsgemäß dadurch gelöst.

Durch das erfindungsgemäße Konzept wird der einer eintauchenden Fahrzeugkarosserie entgegengesetzte Eintauchwiderstand deutlich verringert, da die Fensteröffnungen der Fahrzeugkarosserie, welche der Flüssigkeit des Behandlungsbades große Eintrittsquerschnitte zum Eindringen in den Innenraum der Fahrzeugkarosserie bieten, früher in das Behandlungsbad eintauchen, als dies beim Einbringen der Fahrzeugkarosserien in der Standardstellung der Fall ist.

Außerdem treten keine erhöhten Strömungsgeschwindigkeiten der Flüssigkeit des Behandlungsbades relativ zu einer eintauchenden oder austauchenden Fahrzeugkarosserie auf, da die Fahrzeugkarosserie bereits vor dem Einbringen in das Behandlungsbad in die Kopfüberstellung überführt wird. Aus demselben Grund muß auch die Tiefe des Behandlungsbads nicht erhöht werden.

Beim Ausbringen der Fahrzeugkarosserien aus dem Behandlungsbad in der Kopfüberstellung kann die in den Innenraum der Fahrzeugkarosserien eingedrungene Flüssigkeit durch die Fensteröffnungen vollständig und markierungsfrei ablaufen.

Ferner können sich dadurch, daß beim Transport durch das Behandlungsbad das Dach der Fahrzeugkarosserie nach unten hängt, keine Luftblasen oder Schaum unterhalb des Daches ansammeln, wie dies häufig der Fall ist, wenn eine Fahrzeugkarosserie in Standardstellung durch ein Behandlungsbad gefördert wird. Vielmehr können solche Luftblasen und Schaum bei in Kopfüberstellung durch das Behandlungsbad geförderter Fahrzeugkarosserie durch Auslauföffnungen im Bodenbereich der Fahrzeugkarosserie nach oben aus dem Innenraum der Fahrzeugkarosserie entweichen. Hierdurch wird vermieden, daß Teile der Fahrzeugkarosserie aufgrund von Luftblasen oder Schaumbildung nicht in Kontakt mit der Flüssigkeit des Behandlungsbades kommen und somit nicht der gewünschten Behandlung unterzogen, also beispielsweise gereinigt, entfettet oder lackiert, werden.

Ferner hängen beim Transport der Fahrzeugkarosserien durch das Behandlungsbad in Kopfüberstellung das Dach und die Motorhaube nach unten, so daß sich auf diesen besonders kritischen Sichtflächen der Fahrzeugkarosserie kein Schmutz aus dem Behandlungsbad absetzen kann. Somit werden insbesondere auf den ausgedehnten waagrechten Sichtflächen der Fahrzeugkarosserie Behandlungsfehler, beispielsweise Lackierfehler, aufgrund von sedimentierten Schmutzpartikeln vermieden.

Schließlich ist die Eintauchkontur einer in Kopfüberstellung in das Behandlungsbad eingebrachten Fahrzeugkarosserie von der Eintauchkontur einer in Standardstellung eingebrachten Fahrzeugkarosserie verschieden, was dazu führen kann, daß - in Abhängigkeit von der Gestalt der Fahrzeugkarosserie und von der vorgegebenen Mindesttauchzeit - das Behandlungsbad bei dem erfindungsgemäßen Verfahren kürzer ausgebildet sein kann als bei einem Verfahren, bei welchem die Fahrzeugkarosserien in der Standardstellung in das Behandlungsbad eingebracht werden.

Eine solche Verkürzung des Behandlungsbades ist insbesondere bei kurzen Eintauchzeiten möglich.

Nach dem Ausbringen aus dem Behandlungsbad können die Fahrzeugkarosserien in die Standardstellung zurück überführt werden, um einen weiteren Schritt im Herstellvorgang des Fahrzeuges durchzuführen, beispielsweise die Montage weiterer Komponenten an der Fahrzeugkarosserie, welche üblicherweise in der Standardstellung der Fahrzeugkarosserie durchgeführt wird.

Es ist jedoch keineswegs erforderlich, die Fahrzeugkarosserie nach jedem Durchgang durch ein Behandlungsbad in die Standardstellung zurück zu überführen. Vielmehr ist es möglich, die Fahrzeugkarosserien in der Kopfüberstellung durch mehrere hintereinander angeordnete Behandlungsbereiche, beispielsweise Vorbehandlungsbereiche, Lackierbereiche und Trocknungsbereiche, zu fördern und erst nach dem letzten dieser Behandlungsabschnitte die Fahrzeugkarosserien in die Standardstellung zurück zu überführen.

Grundsätzlich ist bei dem erfindungsgemäßen Verfahren die Orientierung der Fahrzeugkarosserie relativ zur Förderrichtung in der Kopfüberstellung beliebig, solange die Fensteröffnungen der jeweiligen Fahrzeugkarosserie unterhalb der Bodengruppe der Fahrzeugkarosserie angeordnet sind.

Beispielsweise kann vorgesehen sein, daß in der Kopfüberstellung der Fahrzeugkarosserien die Frontscheibenöffnungen der Fahrzeugkarosserien in der Förderrichtung nach hinten weisen.

Ein besonders niedriger Eintauchwiderstand wird jedoch erzielt, wenn vorteilhafterweise vorgesehen ist, daß in der Kopfüberstellung der Fahrzeugkarosserien die Frontscheibenöffnungen der Fahrzeugkarosserien in der Förderrichtung nach vorne weisen.

Bei einer bevorzugten Ausgestaltung des erfindungsgemäßen Verfahrens werden die Fahrzeugkarosserien durch eine Drehung, vorzugsweise durch eine Drehung um ungefähr 180°, von der Standardstellung in die Kopfüberstellung überführt.

Grundsätzlich kann eine solche Drehung um eine beliebige horizontale Drehachse erfolgen.

Vorteilhafterweise ist jedoch vorgesehen, daß die Fahrzeugkarosserien durch eine Drehung um eine im wesentlichen senkrecht zu der Förderrichtung ausgerichtete Drehachse von der Standardstellung in die Kopfüberstellung überführt werden. Bei einer solchen Orientierung der Drehachse können die zur Durchführung der Drehung erforderlichen Lager- und Antriebselemente seitlich neben der Förderbahn der Fahrzeugkarosserien angeordnet werden, ohne das Fördern der Fahrzeugkarosserien längs der Förderrichtung zu behindern.

Grundsätzlich könnte vorgesehen sein, die Fahrzeugkarosserien unmittelbar an einem Förderer, der dieselben durch das Behandlungsbad fördert, anzuordnen.

Bevorzugt wird jedoch eine Ausgestaltung des erfindungsgemäßen Verfahrens, bei dem die Fahrzeugkarosserien an jeweils einem Skidrahmen angeordnet sind.

Unter einem "Skidrahmen" ist dabei jede Transporteinrichtung für ein Werkstück zu verstehen, die mindestens zwei Skidkufen umfaßt, welche quer zur Transportrichtung der Werkstücke im Abstand voneinander angeordnet sind, wobei jede Skidkufe eine Auflagefläche zum Abstützen der Transporteinrichtung an einer im wesentlichen ebenen Stützfläche einer Rollenbahn aufweist.

Die Skidkufen des Skidrahmens können direkt an das Werkstück montiert werden, so daß das Werkstück selbst die Verbindung der Skidkufen untereinander übernimmt.

Üblicherweise sind jedoch Querstreben vorgesehen, welche durch Stützen mit jeder der Skidkufen verbunden sind, um die Skidkufen des Skidrahmens starr miteinander zu verbinden.

Die Stützfläche einer Rollenbahn wird durch die Tragkörperkuppen der Rollenbahn definiert und entspricht der gemeinsamen Tangentialebene der zylindrischen Tragkörper der Tragrollen der Rollenbahn.

Eine auf einem solchen Skidrahmen angeordnete Fahrzeugkarosserie kann somit in einfacher Weise mittels Rollenbahnen horizontal gefördert werden.

Außerdem können in diesem Fall Einhänge- und/oder Mitnahmeeinrichtungen, welche zum Transport der Fahrzeugkarosserie mit anderen Fördereinrichtungen erforderlich sind, an dem Skidrahmen angeordnet werden.

Vorteilhafterweise ist vorgesehen, daß die Skidrahmen in der Kopfüberstellung oberhalb der Fahrzeugkarosserien angeordnet sind, so daß die Skidrahmen in der üblichen Weise mittels geeigneter Verriegelungselemente mit der Bodengruppe der jeweiligen Fahrzeugkarosserie verbunden werden können.

Besonders günstig ist es, wenn Skidrahmen verwendet werden, deren Skidkufen jeweils zwei einander abgewandte Auflageflächen zum Abstützen des Skidrahmens an einer im wesentlichen ebenen Stützfläche einer Rollenbahn aufweisen. Dies ermöglicht es, den Skidrahmen sowohl in einer ersten Stellung, in welcher sich die an dem Skidrahmen angeordnete Fahrzeugkarosserie in der Standardstellung befindet, als auch in einer zweiten Stellung, in welcher sich die an dem Skidrahmen angeordnete Fahrzeugkarosserie in der Kopfüberstellung befindet, mit der jeweils nach unten weisenden Auflagefläche an der Stützfläche einer Rollenbahn abzustützen und somit mittels dieser Rollenbahn horizontal zu fördern.

Das Vorhandensein von zwei unterschiedlich orientierten Auflageflächen an den Skidkufen des Skidrahmens ist auch beim Überführen der Fahrzeugkarosserien von der Standardstellung in die Kopfüberstellung von Vorteil.

So kann insbesondere vorgesehen sein, daß beim Überführen der Fahrzeugkarosserien von der Standardstellung in die Kopfüberstellung mittels einer Drehvorrichtung beide Auflageflächen der Skidkufen an jeweils einer im wesentlichen ebenen Stützfläche der Drehvorrichtung anliegen. Dadurch ist eine besondere zuverlässige Sicherung des Skidrahmens und der daran angeordneten Fahrzeugkarosserie gegen eine Bewegung senkrecht zu diesen Stützflächen während der Überführung von der Standardstellung in die Kopfüberstellung gewährleistet.

Grundsätzlich können die im wesentlichen ebenen Stützflächen der Drehvorrichtung beispielsweise durch Niederhalter mit tangential zu der jeweiligen Stützfläche verlaufenden Niederhalteflächen gebildet sein.

Von Vorteil ist es jedoch, wenn mindestens eine der Stützflächen der Drehvorrichtung als gemeinsame Tangentialebene der Tragkörper der Tragrollen einer Rollenbahn ausgebildet ist. In diesem Fall kann der Skidrahmen mit der daran angeordneten Fahrzeugkarosserie beispielsweise vor der Drehung mittels dieser Rollenbahn auf die betreffende Stützfläche der Drehvorrichtung gefördert werden.

Besonders günstig ist es, wenn beide Stützflächen der Drehvorrichtung jeweils als gemeinsame Tangentialebene der Tragkörper der Tragrollen jeweils einer Rollenbahn ausgebildet sind. In diesem Fall kann der Skidrahmen mit der daran angeordneten Fahrzeugkarosserie vor der Drehung mittels der ersten dieser Rollenbahnen auf die erste Stützfläche der Drehvorrichtung und nach der Drehung mittels der zweiten Rollenbahn von der zweiten Stützfläche der Drehvorrichtung weg und aus der Drehvorrichtung hinaus gefördert werden.

Um zu verhindern, daß die Skidkufen der Skidrahmen im Behandlungsbad mitbehandelt, beispielsweise mitlackiert, werden und daher nach wenigen Durchgängen durch das Behandlungsbad gereinigt werden müssen, ist vorteilhafterweise vorgesehen, daß die Skidkufen der Skidrahmen oberhalb des Behandlungsbadspiegels über das Behandlungsbad hinweg gefördert werden und somit nicht mit der Flüssigkeit im Behandlungsbad in Berührung kommen.

Insbesondere kann vorgesehen sein, daß die Fahrzeugkarosserien in der Kopfüberstellung in die Pendel des Pendelförderers eingehängt werden.

In diesem Fall kann zum Fördern der Fahrzeugkarosserien durch das Behandlungsbad ein üblicher Pendelförderer verwendet werden, wie er beispielsweise aus der DE 36 12 128 A1 bekannt ist, ohne daß dieser Pendelförderer mit einer Zusatzeinrichtung zum Überführen der Fahrzeugkarosserien von der Standardstellung in die Kopfüberstellung versehen werden müßte.

Der zu verwendete Pendelförderer kann jedoch auch in vorteilhafterweise auf die Besonderheiten des erfindungsgemäßen Verfahrens abgestimmt werden.

So ist es insbesondere von Vorteil, wenn vorgesehen ist, daß die Pendel des Pendelförderers vollständig oberhalb der an den Pendeln eingehängten Fahrzeugkarosserien angeordnet sind. In diesem Fall umgreifen die Pendel des Pendelförderers, anders als bei üblichen Pendelförderern wie beispielsweise dem aus der DE 36 12 128 A1 bekannten Pendelförderer, die an dem Pendelförderer eingehängten Fahrzeugkarosserien nicht, so daß im Behandlungsbad seitlich neben den Fahrzeugkarosserien und unterhalb der Fahrzeugkarosserien kein zusätzlicher Raum für die Unterbringung der Pendel vorgesehen werden muß. Die Breite und die Tiefe des Behandlungsbads können daher kleiner gewählt werden als bei einem üblichen Pendelförderer, so daß das Behandlungsbad platzsparender untergebracht werden kann und die zum Auffüllen des Behandlungsbades erforderliche Flüssigkeitsmenge verringert wird.

Handelt es sich bei dem Behandlungsbad um ein elektrophoretisches Beschichtungsbad, so wird dadurch, daß die Pendel des Pendelförderers vollständig oberhalb der an den Pendeln eingehängten Fahrzeugkarosserien angeordnet sind, eine gleichmäßigere Beschichtung der Fahrzeugkarosserie erzielt, da sich die Pendel anders als bei üblichen Pendelförderern nicht in dem Zwischenraum zwischen den Anoden und der Karosserie befinden. Somit gibt es keinen durch die Pendel "abgeschatteten" Bereich der Karosserie, in welchem die Beschichtung eine geringere Schichtdicke aufweist.

Ferner ist es günstig, wenn die Pendel des Pendelförderers oberhalb des Behandlungsbadspiegels über das Behandlungsbad hinweg gefördert werden. In diesem Fall kommen die Pendel des Pendelförderers nicht mit der Flüssigkeit des Behandlungsbads in Berührung und werden nicht mitbehandelt, beispielsweise mitlackiert, so daß es nicht erforderlich ist, die Pendel nach wenigen Durchläufen durch den Pendelförderer zu reinigen.

Für die Ausgestaltung des Pendelförderers gibt es zahlreiche Möglichkeiten.

So kann beispielsweise vorgesehen sein, daß die Pendel des Pendelförderers mittels eines einsträngigen Fördermittels gefördert werden, wobei das Fördermittel beispielsweise mittig über dem Behandlungsbad angeordnet sein kann.

Alternativ hierzu ist auch möglich, daß die Pendel des Pendelförderers mittels eines zweisträngigen Fördermittels gefördert werden.

In diesem Fall können die Führungsbahnen für das Fördermittel direkt über dem Behandlungsbad angeordnet sein, um die Breite einer Kabine, in welcher das Behandlungsbad angeordnet ist, möglichst klein zu halten.

Es kann in diesem Fall jedoch auch vorgesehen sein, daß Führungsbahnen für das Fördermittel oberhalb des Behandlungsbades und seitlich neben demselben angeordnet sind, so daß verhindert wird, daß an den Führungsbahnen für das Fördermittel erzeugter Abrieb nach unten in das Behandlungsbad und/oder auf die durch das Behandlungsbad geförderten Fahrzeugkarosserien fällt.

Um das Fördermittel und die Führungsbahnen für das Fördermittel vor dem Kontakt mit aggressiven chemischen Substanzen aus dem Behandlungsbad zu schützen, ist es von Vorteil, wenn jeder Strang des Fördermittels jeweils in einem geschlossenen Fördermittelkanal angeordnet ist.

Um das Eindringen aggressiver chemischer Substanzen in den Innenraum des Fördermittelkanals zu verhindern, ist es günstig, wenn der Innenraum des Fördermittelkanals gegenüber dem Innenraum der das Behandlungsbad enthaltenden Kabine auf einem erhöhten Luftdruck gehalten wird.

Das Behandlungsbad, durch welches die Fahrzeugkarosserien in der Kopfüberstellung gefördert werden, kann beispielsweise ein Reinigungs-, Entfettungs-, Phosphatierungs- oder Lackierungsbad sein.

Wenn es sich bei dem Behandlungsbad um ein elektrophoretisches Lackierungsbad handelt, so werden vorteilhafterweise in dem Behandlungsbad oberhalb der Bahn der Fahrzeugkarosserien angeordnete Schwelleranoden verwendet, um eine ausreichende Beschichtungsstärke im Bereich der Schwellerbleche der Bodengruppen der Fahrzeugkarosserien zu erzielen. Da die Fahrzeugkarosserien in Kopfüberstellung durch das Behandlungsbad gefördert werden, können die Schwelleranoden oberhalb der Bahn der Fahrzeugkarosserie nahe des Behandlungsbadspiegels angeordnet werden, wo sie für Wartungszwecke zugänglich sind, ohne dass die Flüssigkeit aus dem Behandlungsbad abgelassen werden muss.

Der vorliegenden Erfindung liegt die weitere Aufgabe zugrunde, eine Behandlungsvorrichtung der eingangs genannten Art zu schaffen, welche es ermöglicht, die Fahrzeugkarosserien unter geringem Eintauchwiderstand in das Behandlungsbad einzubringen, ohne dass erhöhte Strömungsgeschwindigkeiten der Flüssigkeit des Behandlungsbads relativ zu den eintauchenden oder austauchenden Fahrzeugkarosserien auftreten.

Diese Aufgabe wird bei einer Behandlungsvorrichtung mit den Merkmalen des Oberbegriffs von Anspruch 23 erfindungsgemäß dadurch gelöst, dass die Fördervorrichtung eine Überführungsvorrichtung umfasst, welche die Fahrzeugkarosserien vor dem Einbringen in das Behandlungsbad aus einer Standardstellung, in welcher Fensteröffnungen der jeweiligen Fahrzeugkarosserie oberhalb der Bodengruppe der Fahrzeugkarosserie angeordnet sind, in eine Kopfüberstellung, in welcher die Fensteröffnungen der jeweiligen Fahrzeugkarosserie unterhalb der Bodengruppe der Fahrzeugkarosserie angeordnet sind, überführt, und dass der Förderer der Fördervorrichtung die Fahrzeugkarosserien anschließend in der Kopfüberstellung in das Behandlungsbad einbringt, durch das Behandlungsbad fördert und aus dem Behandlungsbad wieder ausbringt, wobei der Förderer als Pendelförderer ausgebildet ist, an dem die Fahrzeugkarosserien hängend durch das Behandlungsbad gefördert werden.

Besondere Ausgestaltungen der erfindungsgemäßen Behandlungsvorrichtung sind Gegenstand der abhängigen Ansprüche 24 bis 44, deren Vorteile bereits vorstehend im Zusammenhang mit den Merkmalen der abhängigen Verfahrensansprüche 2 bis 22 erläutert worden sind.

Weitere Merkmale und Vorteile der Erfindung sind Gegenstand der nachfolgenden Beschreibung und zeichnerischen Darstellung von Ausführungsbeispielen.

In den Zeichnungen zeigen:
- Fig. 1: eine schematische Seitenansicht einer Fördervorrichtung mit eingangsseitiger Rollenbahn, eingangsseitiger Drehvorrichtung, eingangsseitiger Hubstation, Pendelförderer, ausgangsseitiger Hubstation, ausgangsseitiger Drehvorrichtung und ausgangsseitiger Rollenbahn;
- Fig. 2: eine schematische Draufsicht auf die Fördervorrichtung aus Fig. 1;
- Fig. 3: eine schematische Seitenansicht einer an einem Skidrahmen angeordneten Fahrzeugkarosserie;
- Fig. 4: eine schematische Vorderansicht einer an einem Skidrahmen angeordneten Fahrzeugkarosserie;
- Fig. 4A: eine schematische Draufsicht auf den Skidrahmen aus den Fig. 3 und 4;
- Fig. 5: eine teilweise geschnittene Ansicht einer Skidkufe und eines daran angeordneten Einhängebereichs des Skidrahmens aus den Fig. 3 bis 4A;
- Fig. 6: einen Schnitt durch die Skidkufe und den Einhängebereich des Skidrahmens längs der Linie 6-6 in Fig. 5;
- Fig. 7: eine Seitenansicht der Skidkufe und des Einhängebereichs des Skidrahmens aus Fig. 5, teilweise geschnitten längs der Linie 7-7 in Fig. 5;
- Fig. 8: eine schematische Draufsicht auf die eingangsseitige Drehvorrichtung der Fördervorrichtung aus Fig. 1;
- Fig. 9: eine schematische Draufsicht auf die eingangsseitige Drehvorrichtung aus Fig. 8 mit einem darauf angeordneten Skidrahmen;
- Fig. 10: eine schematische Vorderansicht zweier Rollenbahnen der eingangsseitigen Drehvorrichtung mit einem darauf angeordneten Skidrahmen;
- Fig. 11: eine schematische Draufsicht auf die eingangsseitige Drehvorrichtung mit einem darauf angeordneten Skidrahmen und einer an dem Skidrahmen angeordneten Fahrzeugkarosserie;
- Fig. 12: eine schematische Vorderansicht der eingangsseitigen Drehvorrichtung mit einem darauf angeordneten Skidrahmen und einer an dem Skidrahmen angeordneten Fahrzeugkarosserie;
- Fig. 13: eine schematische Seitenansicht der eingangsseitigen Drehvorrichtung mit einem darauf angeordneten Skidrahmen und einer an dem Skidrahmen angeordneten Fahrzeugkarosserie, welche sich in der Standardstellung befindet;
- Fig. 14: eine schematische Seitenansicht der eingangsseitigen Drehvorrichtung mit einem darauf angeordneten Skidrahmen und einer an dem Skidrahmen angeordneten Fahrzeugkarosserie, die aus der Standardstellung um einen Winkel von 90° gedreht worden ist;
- Fig. 15: eine schematische Seitenansicht der eingangsseitigen Drehvorrichtung mit einem daran angeordneten Skidrahmen und einer an dem Skidrahmen angeordneten Fahrzeugkarosserie, die durch eine Drehung um 180° in eine Kopfüberstellung überführt worden ist;
- Fig. 16: eine schematische Darstellung einer Klemmeinrichtung der eingangsseitigen Drehvorrichtung in geöffnetem Zustand;
- Fig. 17: eine schematische Darstellung der Klemmeinrichtung aus Fig. 16 im geschlossenen Zustand;
- Fig. 18: eine schematische Seitenansicht der eingangsseitigen Hubstation der Fördervorrichtung aus Fig. 1 mit einem von der Hubstation getragenen Skidrahmen und einer an dem Skidrahmen angeordneten Fahrzeugkarosserie in Kopfüberstellung;
- Fig. 19: eine schematische Vorderansicht der Hubstation aus Fig. 18;
- Fig. 20: eine schematische Vorderansicht eines Pendels des Pendelförderers aus Fig. 1;
- Fig. 21: eine schematische Seitenansicht des Pendels aus Fig. 20 und des Einhängebereichs eines an dem Pendel eingehängten Skidrahmens bei horizontaler Ausrichtung des Skidrahmens;
- Fig. 22: eine schematische Seitenansicht des Pendels aus Fig. 20 und des Einhängebereichs eines an dem Pendel eingehängten Skidrahmens bei geneigter Ausrichtung des Skidrahmens während des Eintauchvorgangs in ein Behandlungsbad;
- Fig. 23: einen schematischen Querschnitt durch eine Kabine eines Pendelförderers, durch welche die Fahrzeugkarosserien mittels eines zweisträngigen Fördermittels gefördert werden, wobei die beiden Stränge des Fördermittels seitlich neben und oberhalb des Behandlungsbades angeordnet sind;
- Fig. 24: einen schematischen Querschnitt durch einen Fördermittelkanal des Pendelförderers aus Fig. 23 mit einer Wartungsklappe in geschlossenem Zustand;
- Fig. 25: einen schematischen Querschnitt durch einen Fördermittelkanal des Pendelförderers aus Fig. 23 mit einer Wartungsklappe in geöffnetem Zustand;
- Fig. 26: eine schematische Seitenansicht der Kabine aus Fig. 23 mit an der Kabine angeordneten Wartungsklappen;
- Fig. 27: einen schematischen Querschnitt durch eine Kabine, durch welche die Fahrzeugkarosserien mittels eines zweisträngigen Fördermittels gefördert werden, wobei die beiden Stränge des Fördermittels über dem Behandlungsbad angeordnet sind;
- Fig. 28: einen schematischen Querschnitt durch eine Kabine des Pendelförderers aus Fig. 1, durch welche Fahrzeugkarosserien mittels eines einsträngigen Fördermittels gefördert werden;
- Fig. 29: eine schematische Seitenansicht des Pendelförderers und des Behandlungsbades aus Fig. 1; und
- Fig. 30: eine schematische Seitenansicht eines Pendelförderers und eines verkürzten Behandlungsbades.

Gleiche oder funktional äquivalente Elemente sind in allen Figuren mit denselben Bezugszeichen bezeichnet.

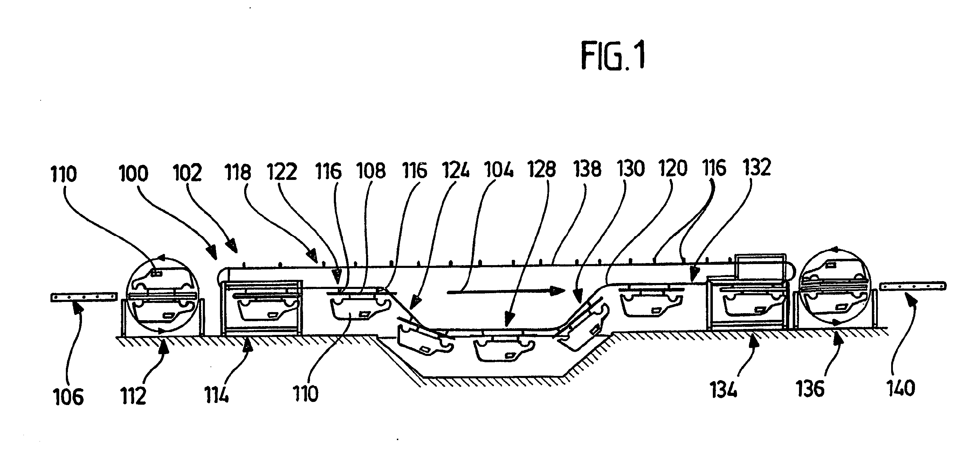

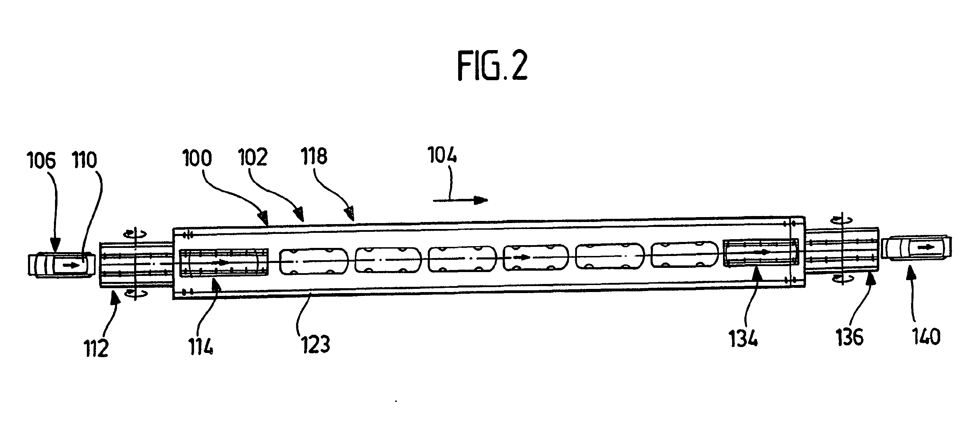

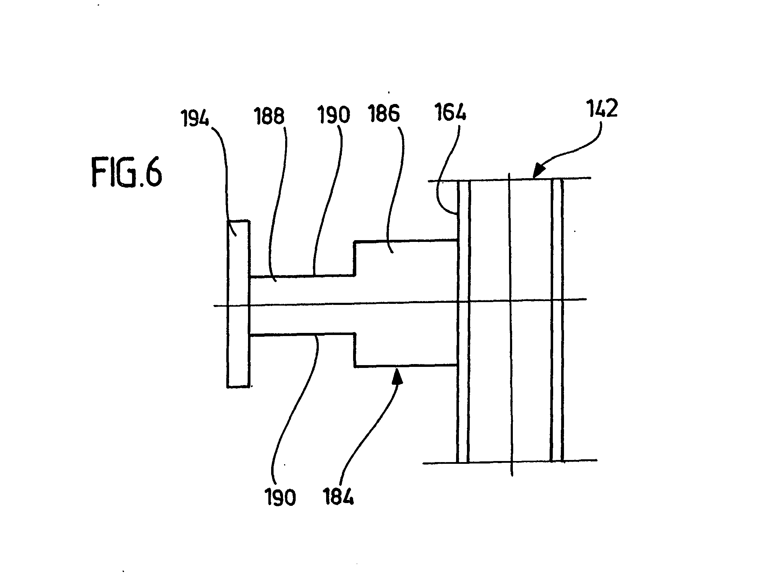

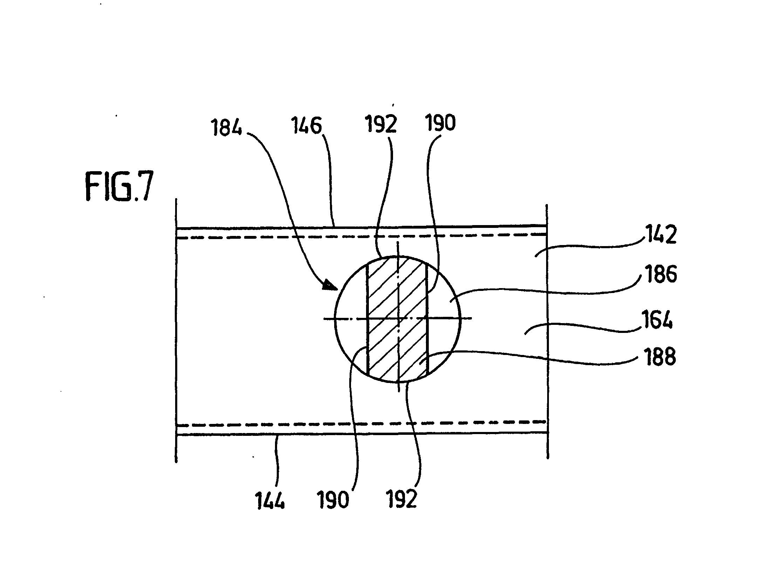

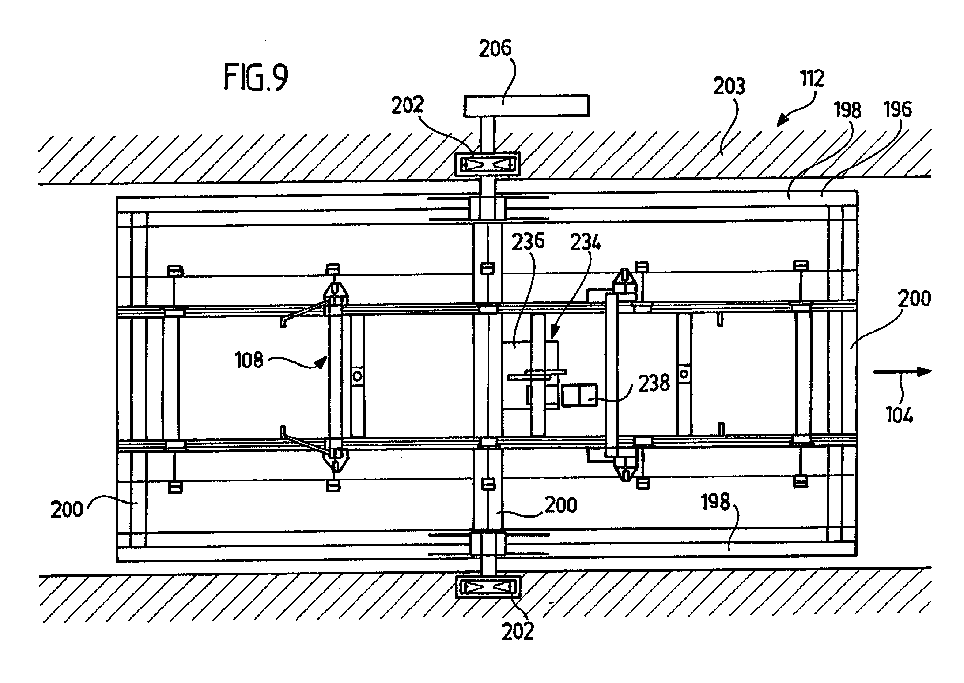

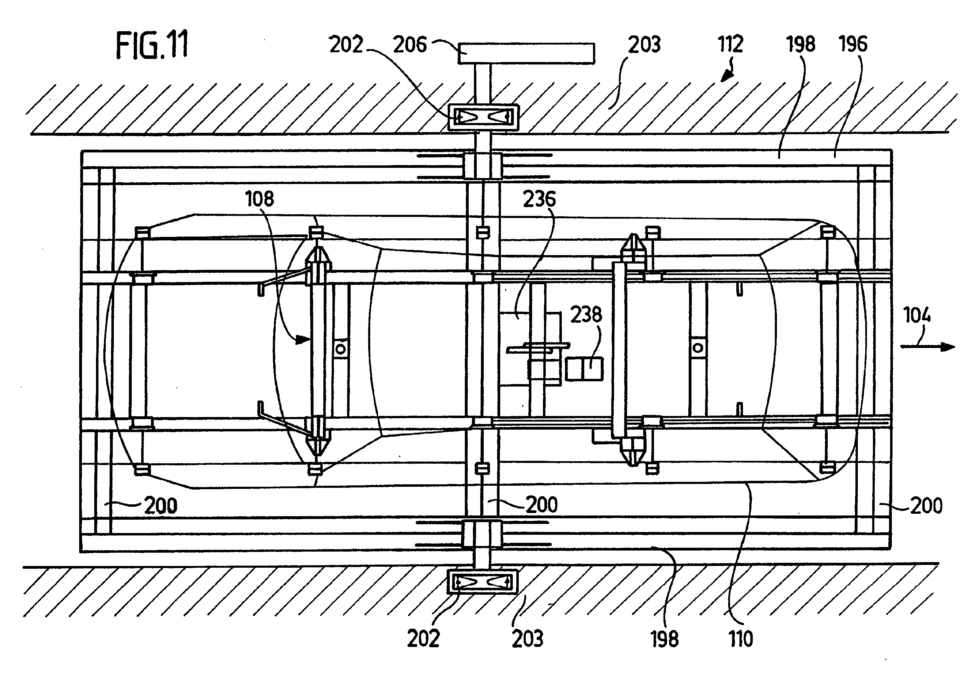

Eine in den Fig. 1 bis 26 und 29 dargestellte, als Ganzes mit 100 bezeichnete Behandlungsvorrichtung für Fahrzeugkarosserien umfaßt eine in den Fig. 1 und 2 schematisch dargestellte, als Ganzes mit 102 bezeichnete Fördervorrichtung zum Fördern von Fahrzeugkarosserien.

Die Fördervorrichtung 102 umfaßt, in der Förderrichtung 104 aufeinanderfolgend, folgende Bestandteile: eine eingangsseitige Rollenbahn 106 zum horizontalen Transport von an Skidrahmen 108 angeordneten Fahrzeugkarosserien 110 längs der Förderrichtung 104, das heißt in der Darstellung der Fig. 1 und 2 nach rechts, wobei sich die Fahrzeugkarosserien 110 in einer Standardstellung befinden, in welcher Fensteröffnungen der Fahrzeugkarosserien 110 oberhalb der Bodengruppe der Fahrzeugkarosserien 110 angeordnet sind.

In der Förderrichtung 104 schließt sich an die eingangsseitige Rollenbahn 106 eine eingangsseitige Drehvorrichtung 112 an, welche dazu dient, die Fahrzeugkarosserien 110 durch eine Drehung um 180° in eine Kopfüberstellung zu überführen, in welcher Fensteröffnungen der Fahrzeugkarosserien 110 unterhalb der Bodengruppe der Fahrzeugkarosserien 110 angeordnet sind.

Längs der Förderrichtung 104 schließt sich an die eingangsseitige Drehvorrichtung 112 eine eingangsseitige Hubstation 114 an, in welcher die Skidrahmen 108 mit den daran angeordneten Fahrzeugkarosserien 110 in Pendel 116 eines als Ganzes mit 118 bezeichneten Pendelförderers eingehängt werden. Die Pendel 116 sind auf im folgenden noch näher zu beschreibende Weise mit einem endlos umlaufenden Fördermittel 120 des Pendelförderers 118 verbunden, welches in an sich bekannter und darum hier nicht näher beschriebener Weise angetrieben wird und die Pendel 116 mit den daran eingehängten Skidrahmen 108 längs der Förderrichtung 104 durch eine Kabine 123 (Fig. 2) transportiert.

Wie aus Fig. 1 zu ersehen ist, weist der Pendelförderer 118 einen eingangsseitigen horizontalen Einlaufabschnitt 122 auf, in dem die Fahrzeugkarosserien 110 in Kopfüberstellung horizontal transportiert werden, einen sich daran anschließenden schrägen Eintauchabschnitt 124, in dem die Fahrzeugkarosserien in Kopfüberstellung unter einem Neigungswinkel von ungefähr 45° schräg nach unten in ein Behandlungsbad 126 hinein gefördert werden, einen sich daran anschließenden horizontalen Behandlungsbadabschnitt 128, in dem die Fahrzeugkarosserien 110 in Kopfüberstellung horizontal gefördert werden, einen sich daran anschließenden schrägen Austauchabschnitt 130, in dem die Fahrzeugkarosserien 110 in Kopfüberstellung unter einem Neigungswinkel von ungefähr 45° aus dem Behandlungsbad 126 herausgefördert werden, und einen sich daran anschließenden horizontalen Auslaufabschnitt 132, in dem die Fahrzeugkarosserien 110 in Kopfüberstellung horizontal zu einer ausgangsseitigen Hubstation 134 gefördert werden.

In der ausgangsseitigen Hubstation 134 werden die Skidrahmen 108 mit den daran angeordneten Fahrzeugkarosserien 110 aus den Pendeln 116 des Pendelförderers 118 herausgehoben und anschließend in der Förderrichtung 104 in eine ausgangsseitige Drehvorrichtung 136 gefördert.

Die leeren Pendel 116 werden von einem Rücklauftrum 138 des Fördermittels 120 zur eingangsseitigen Hubstation 114 zurücktransportiert.

Die in die ausgangsseitige Drehvorrichtung 136 geförderten Fahrzeugkarosserien 110 werden in derselben durch Drehung um 180° aus der Kopfüberstellung in die Standardstellung, in welcher Fensteröffnungen der Fahrzeugkarosserien 110 oberhalb der Bodengruppe der Fahrzeugkarosserien 110 angeordnet sind, zurück überführt.

Anschließend werden die Fahrzeugkarosserien 110 in der Standardstellung aus der ausgangsseitigen Drehvorrichtung 136 in der Förderrichtung 104 zu einer ausgangsseitigen Rollenbahn 140 gefördert. Die ausgangsseitige Rollenbahn 140 bringt die Fahrzeugkarosserien 110 in der Standardstellung zu einer (nicht dargestellten) weiteren Behandlungsvorrichtung, in der der nächste Behandlungsschritt an den Fahrzeugkarosserien 110 durchgeführt wird.

Es ist jedoch keineswegs erforderlich, die Fahrzeugkarosserien 110 nach jedem einzelnen Behandlungsabschnitt in die Standardstellung zurück zu überführen. Vielmehr ist es möglich, die Fahrzeugkarosserien in der Kopfüberstellung durch mehrere hintereinander angeordnete Behandlungsbereiche, beispielsweise Vorbehandlungsbereiche, Lackierbereiche und Trocknungsbereiche, zu fördern und erst nach dem letzten dieser Behandlungsabschnitte die Fahrzeugkarosserien 110 in die Standardstellung zurück zu überführen.

Nach dem vorstehend gegebenen Überblick über den gesamten Förderfluß durch die Behandlungsvorrichtung werden nachfolgend die verwendeten Skidrahmen sowie die einzelnen Bestandteile der Behandlungsvorrichtung im einzelnen erläutert.

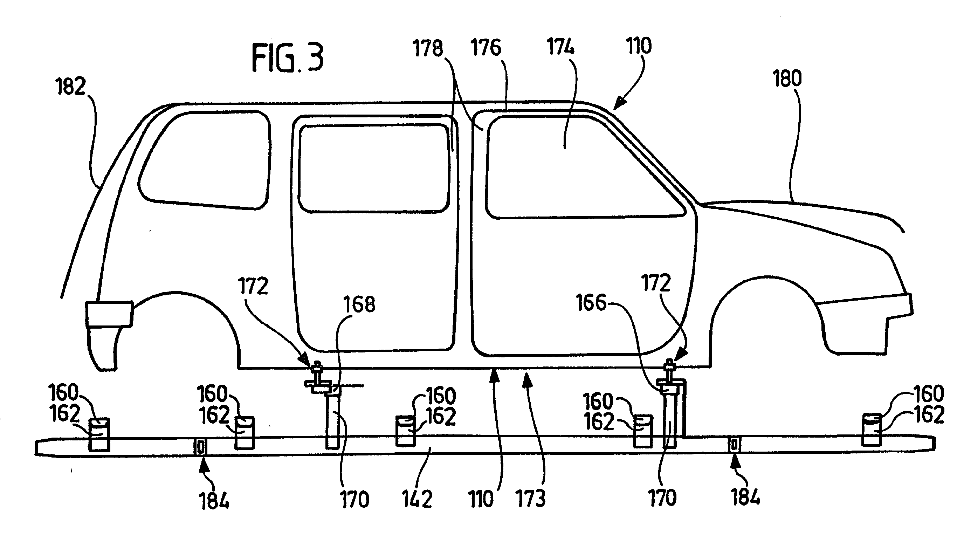

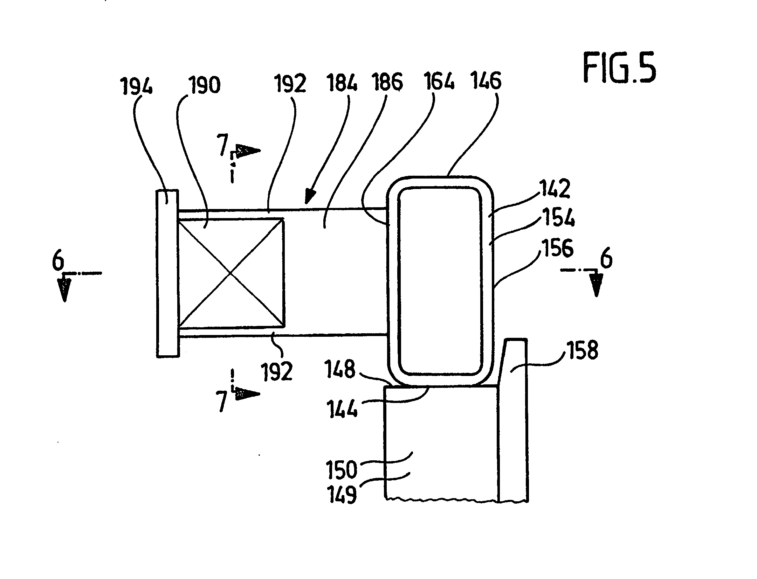

Jeder der bei der hier beschriebenen Behandlungsvorrichtung 100 verwendeten Skidrahmen 108, von denen einer in den Fig. 3 bis 7 im Detail dargestellt ist, umfaßt zwei parallel im Abstand voneinander angeordnete Skidkufen 142, die beispielsweise als Hohlprofile mit rechteckigem Querschnitt (Fig. 5) ausgebildet sind.

Jede der Skidkufen 142 weist eine sich in der Längsrichtung des Skidrahmens 108 erstreckende, im wesentlichen rechteckige ebene untere Auflagefläche 144 und eine der unteren Auflagefläche 144 abgewandte, sich ebenfalls in der Längsrichtung des Skidrahmens 108 erstreckende, im wesentlichen rechteckige ebene obere Auflagefläche 146 auf.

Die Auflageflächen 144 und 146 dienen dazu, den Skidrahmen 108 auf den Mantelflächen 148 von zylindrischen Tragkörpern 149 von Tragrollen 150 abzustützen.

Die Skidkufen 142 können somit sowohl in der in den Fig. 3 bis 5 dargestellten Standardstellung (mit der unteren Auflagefläche 144) als auch in einer Kopfüberstellung, in welcher der Skidrahmen 108 um 180° um eine horizontale Drehachse gedreht ist, (mit der oberen Auflagefläche 146) auf Tragrollen einer Rollenbahn aufliegen und durch die Reibung zwischen den Auflageflächen 144 oder 146 einerseits und den Mantelflächen der Tragkörper 149 andererseits vorwärts bewegt werden.

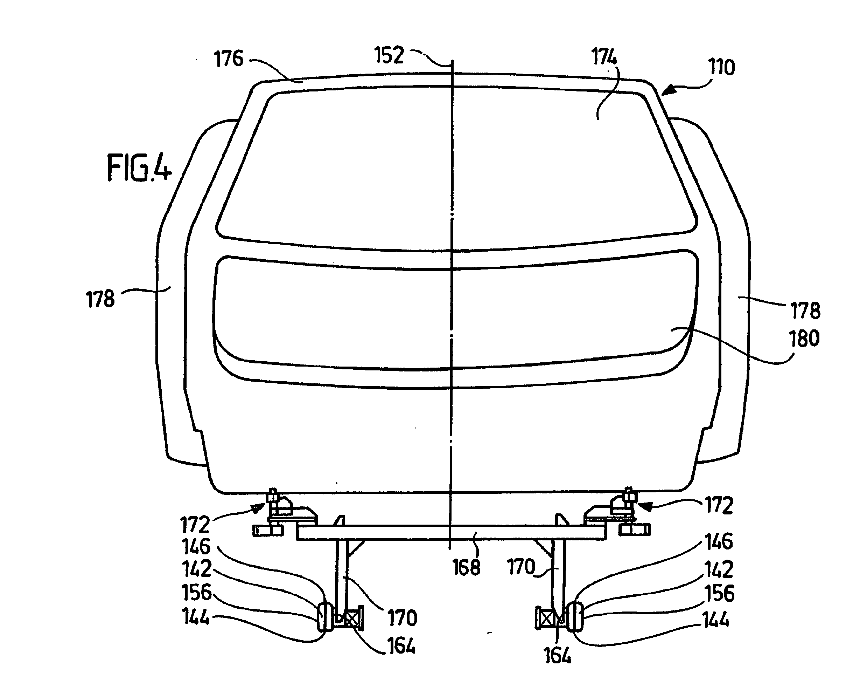

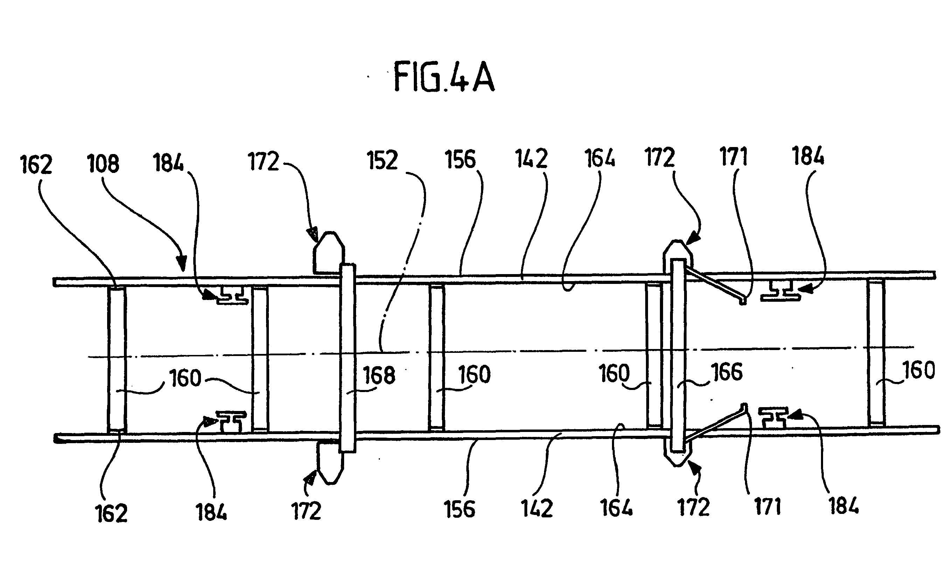

Wie aus den Fig. 4 und 5 zu ersehen ist, bildet die Außenseite der einer Mittelebene 152 des Skidrahmens 108 abgewandten äußeren Seitenwand 154 der Skidkufen 142 jeweils eine Führungsfläche 156, welche mit Spurkränzen 158 der Tragrollen 150 zusammenwirken, um den Skidrahmen 108 beim Transport auf der Rollenbahn mittig und parallel zur Förderrichtung ausgerichtet zu halten.

Wie aus den Fig. 3 und 4A zu ersehen ist, sind die beiden Skidkufen 142 des Skidrahmens 108 mittels mehrerer, beispielsweise fünf senkrecht zu den Skidkufen 142 ausgerichteter Querstreben 160 miteinander verbunden. Die Querstreben 160 sind beispielsweise als U-Profilstäbe ausgebildet und an beiden Enden mittels Stützen 162 an den der Mittelebene 152 des Skidrahmens 108 zugewandten inneren Seitenwänden 164 der Skidkufen 142 gehalten.

Ferner umfaßt der Skidrahmen 108 eine vordere Quertraverse 166 und eine hintere Quertraverse 168, welche sich senkrecht zur Längsrichtung des Skidrahmens 108 erstrecken und über Stützen 170 an den inneren Seitenwänden 164 der Skidkufen 142 gehalten sind.

Wie aus Fig. 3 zu ersehen ist, sind die Stützen 170 der Quertraversen 166 und 168 länger ausgebildet als die Stützen 162 der Querstreben 160, so daß sich die Quertraversen 166, 168 in größerem vertikalen Abstand von den Skidkufen 142 befinden als die Querstreben 160.

Die Quertraversen 166 und 168 dienen der Aufnahme der zu tragenden Fahrzeugkarosserie 110 und sind zu diesem Zweck an ihren Enden mit Verriegelungselementen 172 versehen, mittels derer die Fahrzeugkarosserie 110 an den Quertraversen 166, 168 festlegbar ist. Die Verriegelungselemente 172 sind so ausgebildet, daß sie, unabhängig von der Orientierung des Skidrahmens 108 und der darauf angeordneten Fahrzeugkarosserie 110 bezüglich der Vertikalen, jegliche Relativbewegung zwischen der Fahrzeugkarosserie 110 und dem Skidrahmen 108 verhindern.

Ferner sind Kontaktierungselemente 171 vorgesehen, durch welche ein elektrischer Kontakt zwischen einer (nicht dargestellten) Kontaktierungsglocke des Skidrahmens 108 und der daran angeordneten Fahrzeugkarosserie 110 hergestellt wird, um beispielsweise eine kataphoretische Tauchlackierung durchführen zu können.

Die Kontaktierungselemente 171 können beispielsweise aus Kupfer-Flachmaterial gebildet sein.

Statt einer Kontaktierung der Fahrzeugkarosserie 110 mittels der Kontaktierungselemente 171 kann auch vorgesehen sein, den elektrischen Kontakt zur Fahrzeugkarosserie durch die tragenden Elemente des Skidrahmens 108 selbst, welche vorzugsweise aus Stahl bestehen, herzustellen.

Die Fahrzeugkarosserie 110 wird so an dem Skidrahmen 108 festgelegt, daß eine Bodengruppe 173 der Fahrzeugkarosserie 110 dem Skidrahmen 108 zugewandt ist, während Fensteröffnungen 174 und das Dach 176 in einem dem Skidrahmen 108 abgewandten Bereich der Fahrzeugkarosserie 110 angeordnet sind.

Zum Transport durch die Behandlungsvorrichtung 100 werden an der Fahrzeugkarosserie 110 vorhandene Türen 178, eine Motorhaube 180 sowie ein Kofferraumdeckel oder gegebenenfalls eine Heckklappe 182 leicht geöffnet, um möglichst zahlreiche Eindringöffnungen für das Eindringen von Flüssigkeit aus dem Behandlungsbad 126 in den Innenraum der Fahrzeugkarosserie 110 zu schaffen.

Ferner weist jeder Skidrahmen 108 an jeder Skidkufe 142 jeweils zwei Einhängebereiche 184 auf, welche im Abstand voneinander an der inneren Seitenwand 164 der jeweiligen Skidkufe 142 angeordnet sind.

Jeder der Einhängebereiche 184 umfaßt einen zylindrischen Abschnitt 186, der an einer seiner Stirnseiten an der inneren Seitenwand 164 der betreffenden Skidkufe 142 festgelegt ist und an seiner der Skidkufe 142 abgewandten Stirnseite einen Einhängezapfen 188 trägt, welcher zwei ebene Seitenflächen 190 aufweist, die durch zwei zylindrisch gekrümmte Seitenflächen 192 miteinander verbunden sind (siehe Fig. 5 bis 7).

An seinem dem zylindrischen Abschnitt 186 abgewandten Ende trägt der Einhängezapfen 188 eine zylindrische Anschlagscheibe 194, deren Durchmesser den Durchmesser des zylindrischen Abschnitts 186 und des Einhängezapfens 188 übertrifft.

Die Einhängebereiche 184 dienen dazu, den Skidrahmen 108 in vier Pendel 116 des Pendelförderers 118 einzuhängen, was nachfolgend noch im einzelnen beschrieben werden wird.

Der Skidrahmen 108 mit der daran angeordneten Fahrzeugkarosserie 110 wird in der Standardstellung auf die eingangsseitige Rollenbahn 106 der Fördervorrichtung 102 aufgesetzt, das heißt in der Weise, daß die Fahrzeugkarosserie 110 oberhalb des Skidrahmens 108 und die Fensteröffnungen 174 der Fahrzeugkarosserie 110 oberhalb der Bodengruppe 173 angeordnet sind.

Ferner wird der Skidrahmen 108 mit der Fahrzeugkarosserie 110 so auf die eingangsseitige Rollenbahn 106 aufgesetzt, daß das Heck der Fahrzeugkarosserie 110 in die Förderrichtung 104 weist, während das Vorderteil der Fahrzeugkarosserie 110 mit der Motorhaube 180 entgegen der Förderrichtung 104 nach hinten weist.

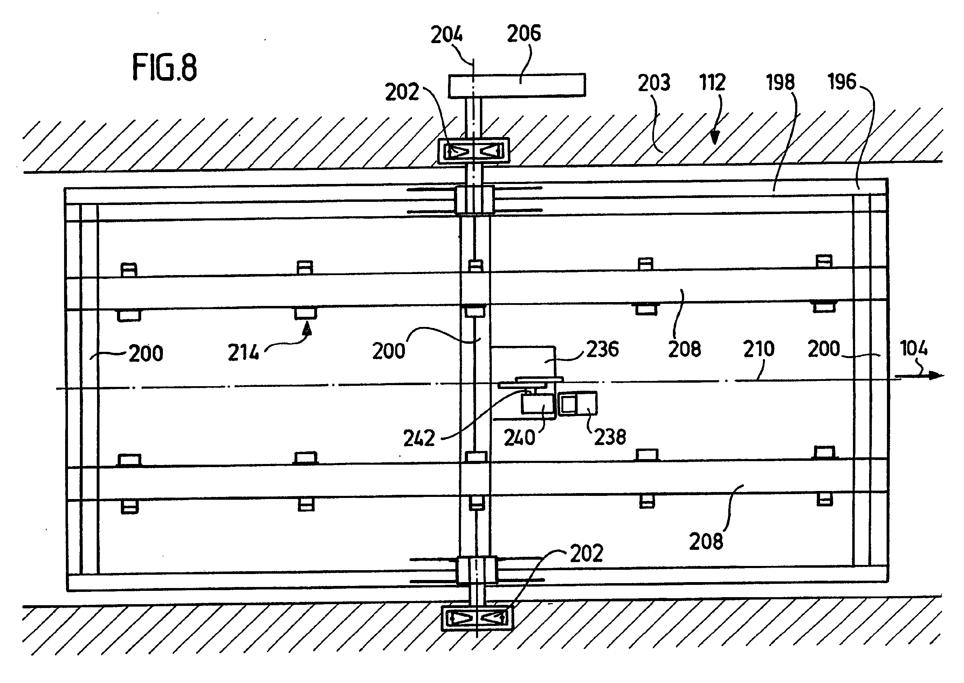

In dieser Stellung wird der Skidrahmen 108 mit der Fahrzeugkarosserie 110 durch die eingangsseitige Rollenbahn 106 in die eingangsseitige Drehvorrichtung 112 gefördert, welche in den Fig. 8 bis 17 im einzelnen dargestellt ist.

Wie am besten aus den Fig. 8, 12 und 13 zu ersehen ist, umfaßt die eingangsseitige Drehvorrichtung 112 einen rechtwinkligen Drehrahmen 196 mit zwei parallel zur Förderrichtung 104 ausgerichteten Längsträgern 198, welche mittels dreier Querträger 200 miteinander verbunden sind.

Der Drehrahmen 196 ist an zwei Lagerböcken 202 um eine senkrecht zur Förderrichtung 104 ausgerichtete horizontale Drehachse 204 drehbar gelagert. Die Lagerböcke 202 ruhen auf einem stationären Rahmen 203 der Drehvorrichtung 112.

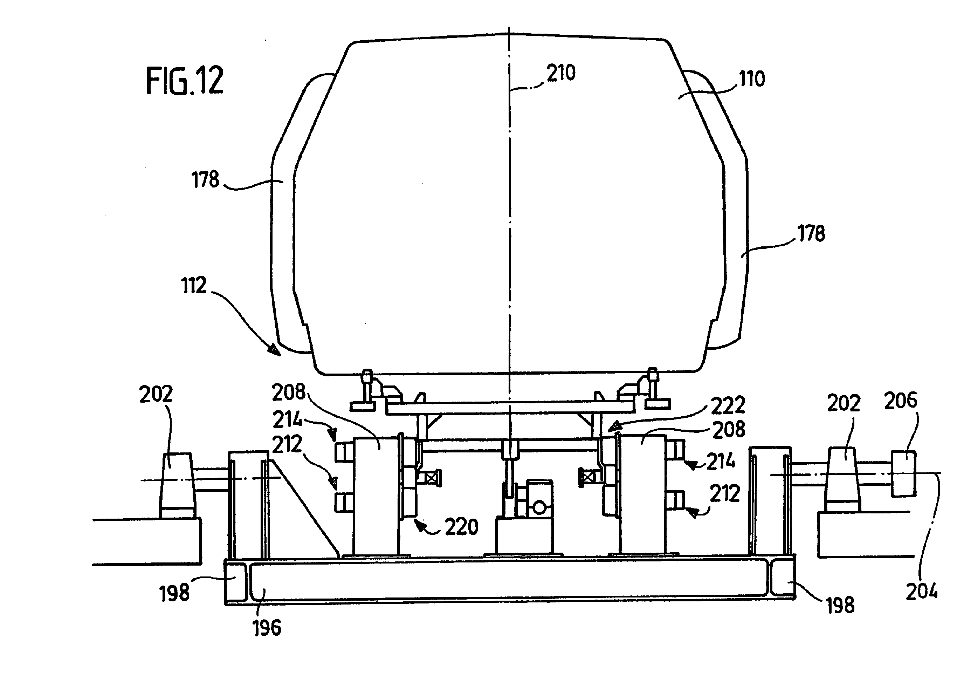

Der Antrieb der Drehbewegung des Drehrahmens 196 um die Drehachse 204 erfolgt mittels eines in den Fig. 8 und 12 schematisch dargestellten Drehantriebsmotors 206.

Die Querträger 200 des Drehrahmens 196 tragen zwei Konsolen 208, welche sich parallel zur Förderrichtung 104 erstrecken und bezüglich einer Mittelebene 210 des Drehrahmens 196 symmetrisch zueinander ausgebildet sind.

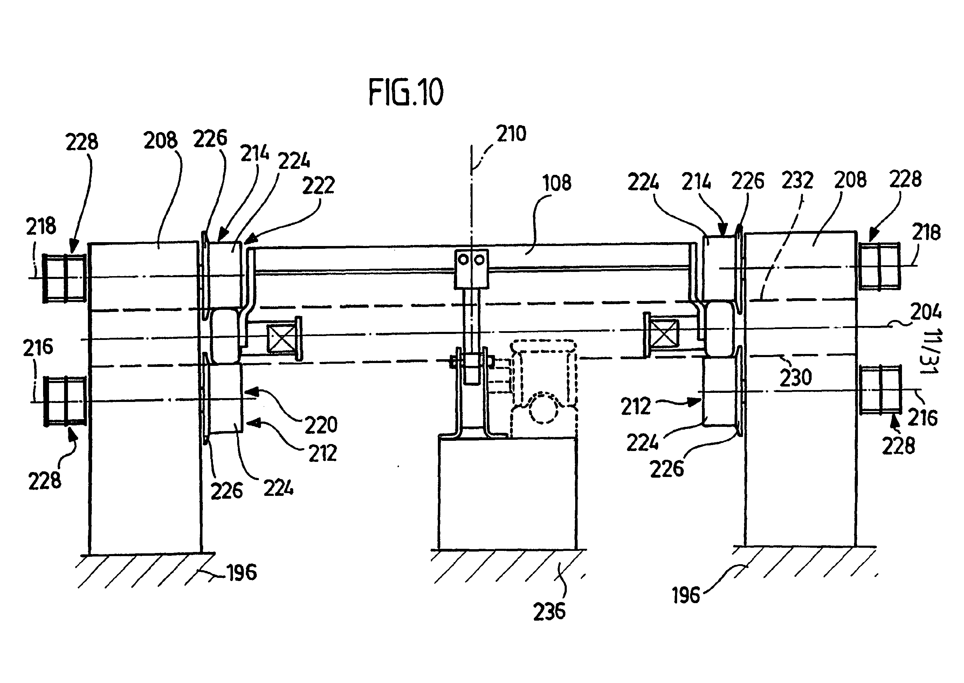

Wie am besten aus Fig. 10 zu ersehen ist, sind in jeder der Konsolen 208 untere Tragrollen 212 und obere Tragrollen 214 um senkrecht zur Förderrichtung 104 ausgerichtete horizontale Drehachsen 216 bzw. 218 drehbar gelagert.

In jeder der Konsolen 208 sind mehrere, beispielsweise fünf, untere Tragrollen 212 äquidistant längs der Förderrichtung 104 und in konstantem Abstand von der Oberseite des Drehrahmens 196 angeordnet, so daß die unteren Tragrollen 212 in beiden Konsolen 208 zusammen eine untere Rollenbahn 220 der Drehvorrichtung 112 bilden.

Senkrecht über jeder unteren Tragrolle 212 ist jeweils eine obere Tragrolle 214 in der betreffenden Konsole 208 angeordnet, wobei der vertikale Abstand der Drehachsen 216 bzw. 218 der paarweise einander zugeordneten unteren Tragrollen 212 bzw. oberen Tragrollen 214 konstant ist, so daß auch die oberen Tragrollen 214 in den beiden Konsolen 208 zusammen eine obere Rollenbahn 222 der Drehvorrichtung 112 bilden.

Wie aus Fig. 10 zu ersehen ist, umfaßt jede der Tragrollen 212 oder 214 an einem inneren, d.h. der Mittelebene 210 des Drehrahmens 196 zugewandten Ende einen zylindrischen Tragkörper 224, an den sich zur Konsole 208 hin jeweils ein Spurkranz 226 anschließt.

An einem äußeren, d.h. der Mittelebene 210 des Drehrahmens 196 abgewandten Ende jeder Tragrolle 212 oder 214 ist jeweils eine doppelte Zahnriemenscheibe 228 angeordnet. Mittels auf den Zahnriemenscheiben 228 aufliegender (nicht dargestellter) Zahnriemen stehen die Tragrollen 212, 214 mit einem oder mehreren (ebenfalls nicht dargestellten) Antriebsmotoren in Wirkverbindung, so daß die Tragkörper 224 der Tragrollen 212, 214 in Drehbewegung versetzt werden können.

Die Tragkörper 224 der Tragrollen 212 der unteren Rollenbahn 220 weisen eine gemeinsame obere Tangentialebene auf, welche eine untere Stützfläche 230 für die Skidrahmen 108 bildet.

Die untere Stützfläche 230 wird also durch die oberen Kuppen der Tragkörper 224 der Tragrollen 212 der unteren Rollenbahn 220 definiert.

In entsprechender Weise weisen die Tragkörper 224 der oberen Tragrollen 214 der oberen Rollenbahn 222 eine gemeinsame untere Tangentialebene auf, welche eine obere Stützfläche 232 für die Skidrahmen 108 bildet.

Die obere Stützfläche 232 wird also durch die unteren Kuppen der Tragkörper 224 der Tragrollen 214 der oberen Rollenbahn 222 definiert.

Die Drehachse 204 des Drehrahmens 196 verläuft mittig zwischen der unteren Stützfläche 230 und der oberen Stützfläche 232.

Der vertikale Abstand der oberen Stützfläche 232 von der unteren Stützfläche 230 entspricht der Höhe einer Skidkufe 142, so daß sich die Skidkufen 142 eines in die Drehvorrichtung 112 eingelaufenen Skidrahmens 108 mit ihren unteren Auflageflächen 144 an den Tragkörpern 224 der Tragrollen 212 der unteren Rollenbahn 220 abstützen und zugleich mit ihren oberen Auflageflächen 146 an den Tragkörpern 224 der Tragrollen 214 der oberen Rollenbahn 222 der Drehvorrichtung 112 zur Anlage kommen.

Somit ist ein in der Drehvorrichtung 112 befindlicher Skidrahmen 108 durch die Stützflächen 230 und 232 gegen eine Relativbewegung zu dem Drehrahmen 196 senkrecht zu diesen Stützflächen 230, 232 gesichert.

Gegen eine Relativbewegung in Bezug auf den Drehrahmen 196 parallel zu den Drehachsen 216 oder 218 der Tragrollen 212 bzw. 214 ist der Skidrahmen 108 durch die Spurkränze 226 der Tragrollen gesichert.

Eine Sicherung des Skidrahmens 108 gegen eine Relativbewegung in Bezug auf den Drehrahmen 196 in Längsrichtung des Drehrahmens 196 erfolgt mittels einer Klemmeinrichtung 234, die von einer an dem mittleren Querträger 200 des Drehrahmens 196 festgelegten Tragplatte 236 getragen wird.

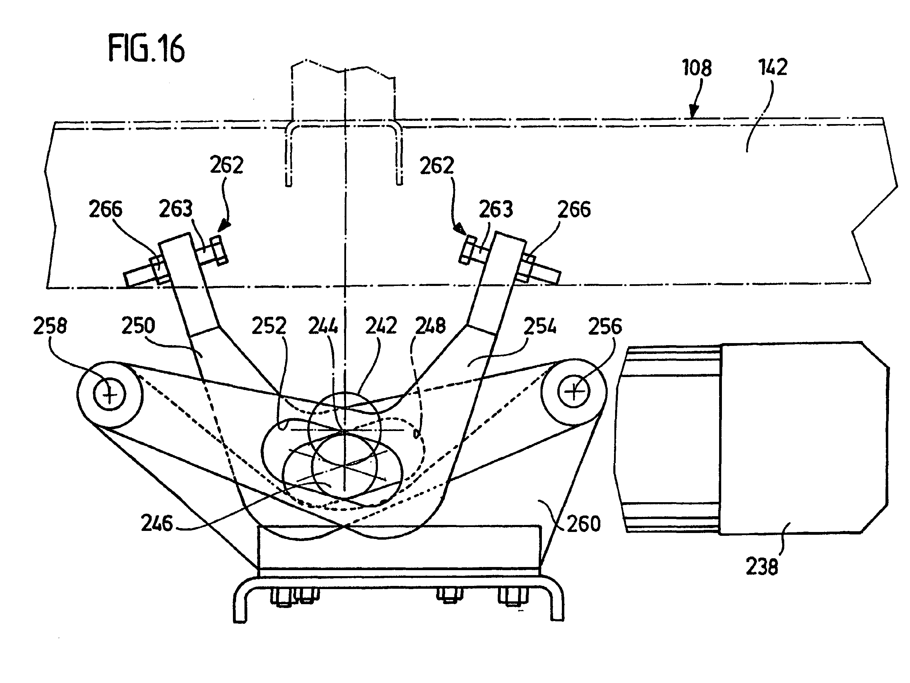

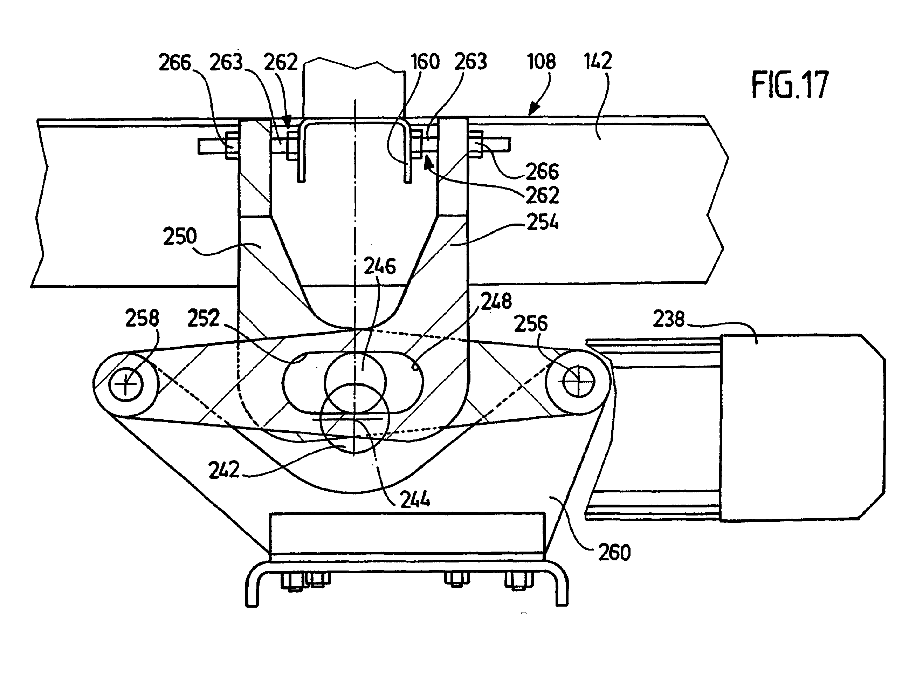

Die Klemmeinrichtung 234 umfaßt einen Antriebsmotor 238, der über ein Winkelgetriebe 240 die Drehbewegung einer Antriebswelle 242 (Fig. 16 und 17) antreibt, deren Drehachse 244 parallel zu den Drehachsen 216, 218 der Tragrollen 212, 214 und somit parallel zu den Querstreben 160 des Skidrahmens 108 ausgerichtet ist.

Die Antriebswelle 242 trägt einen exzentrisch zu derselben angeordneten zylindrischen Antriebsbolzen 246, welcher sich parallel zur Drehachse 244 durch ein Langloch 248 eines ersten Klemmhebels 250 und durch ein Langloch 252 eines zweiten Klemmhebels 254 erstreckt.

Die beiden Klemmhebel 250 und 254 sind an senkrecht zur Drehachse 244 voneinander beabstandeten Anlenkpunkten 256 bzw. 258 an einer an der Tragplatte 236 festgelegten Basis 260 angelenkt.

Beide Klemmhebel 250 und 254 sind als im wesentlichen rechtwinklige Winkelhebel ausgebildet und an ihrem jeweils freien Ende mit einem justierbaren Klemmelement 262, beispielsweise einer den freien Schenkel des Klemmhebels 250 bzw. 254 durchsetzenden Gewindeschraube 263 mit Kontermutter 266, versehen.

In einer in Fig. 16 dargestellten Offenstellung der Klemmeinrichtung 234 ist der Antriebsbolzen 246 senkrecht unter der Drehachse 244 der Antriebswelle 242 angeordnet, und die Klemmelemente 262 der Klemmhebel 250, 254 klaffen weit auseinander.

Durch Drehung der Antriebswelle 242 mittels des Antriebsmotors 238 um einen Winkel von 180 ° ist der Antriebsbolzen 246 in die in Fig. 17 dargestellte Stellung bewegbar, in welcher der Antriebsbolzen 246 senkrecht über der Drehachse 244 angeordnet ist.

Aufgrund der Bewegung des Antriebsbolzens 246 von dessen unterer Stellung (Fig. 16) in dessen obere Stellung (Fig. 17) werden auch die am Rand der Langlöcher 248, 252 mit dem Umfang des Antriebsbolzens 246 in Verbindung stehenden Klemmhebel 250 und 254 um deren Anlenkpunkte 256 bzw. 258 in die in Fig. 17 dargestellte Schließstellung geschwenkt, in welcher die Klemmelemente 262 der Klemmhebel 250 und 254 einander in einem Schließabstand gegenüberstehen.

Der Schließabstand der Klemmeinrichtung 234 ist gleich groß wie die Breite einer der Querstreben 160 des Skidrahmens 108, so daß eine in der Schließstellung der Klemmeinrichtung 234 zwischen deren Klemmelementen 262 angeordnete Querstrebe 160 des Skidrahmens 108 zu beiden Seiten an den Klemmelementen 262 anliegt und somit durch die Klemmelemente 262 an einer Relativbewegung in Bezug auf die Klemmeinrichtung 234 und damit in Bezug auf den Drehrahmen 196 in der Längsrichtung des Drehrahmens 196 gehindert wird.

Nach Schließen der Klemmeinrichtung 234 ist somit ein in die eingangsseitige Drehvorrichtung 112 eingelaufener Skidrahmen 108 durch die Klemmeinrichtung 234, durch die Spurkränze 226 der Tragrollen 212, 214 und durch die Tragkörper 224 der Tragrollen 212, 214 an jeglicher Relativbewegung in Bezug auf den Drehrahmen 196 gehindert.

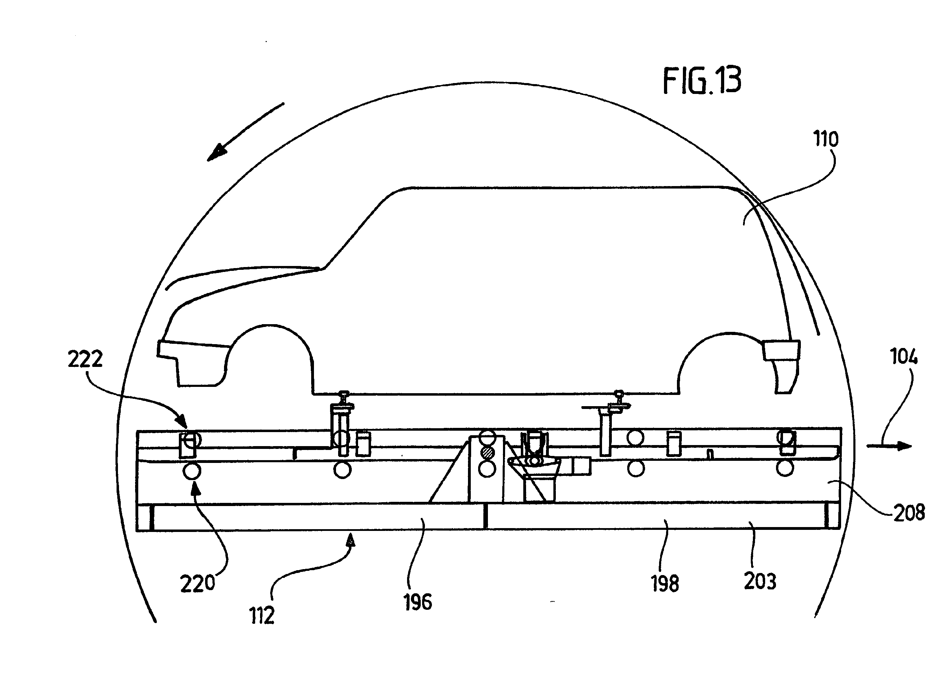

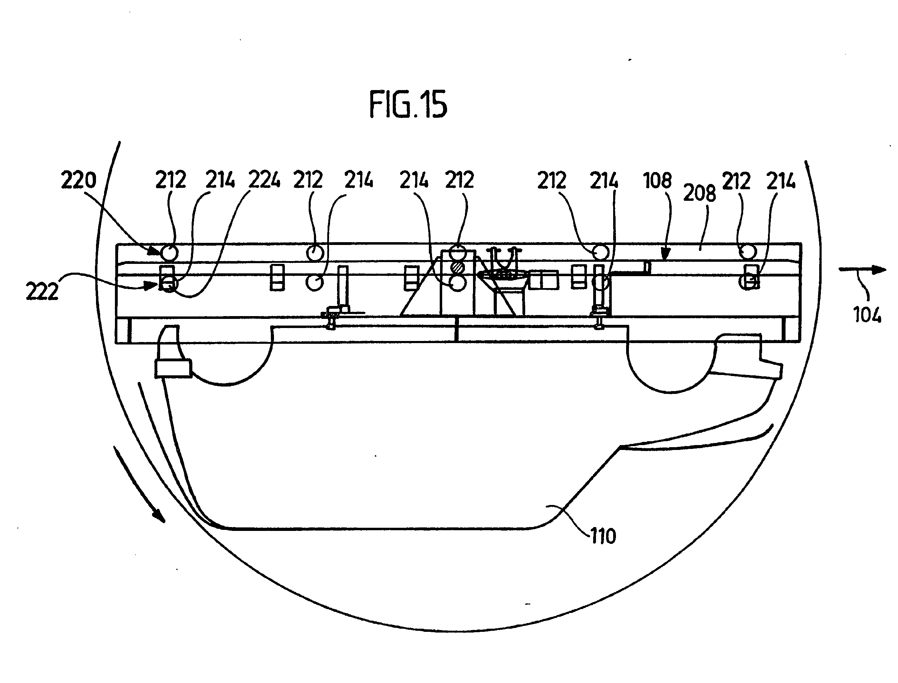

Nachdem die Klemmeinrichtung 234 um eine Querstrebe 160 des Skidrahmens 108 geschlossen worden ist, wird die an dem Skidrahmen 108 angeordnete Fahrzeugkarosserie 110 durch eine von dem Drehantriebsmotor 206 angetriebene Drehung des Drehrahmens 196 um die Drehachse 208 um einen Winkel von 180 ° von der in Fig. 13 dargestellten Standardstellung in die in Fig. 15 dargestellte Kopfüberstellung überführt.

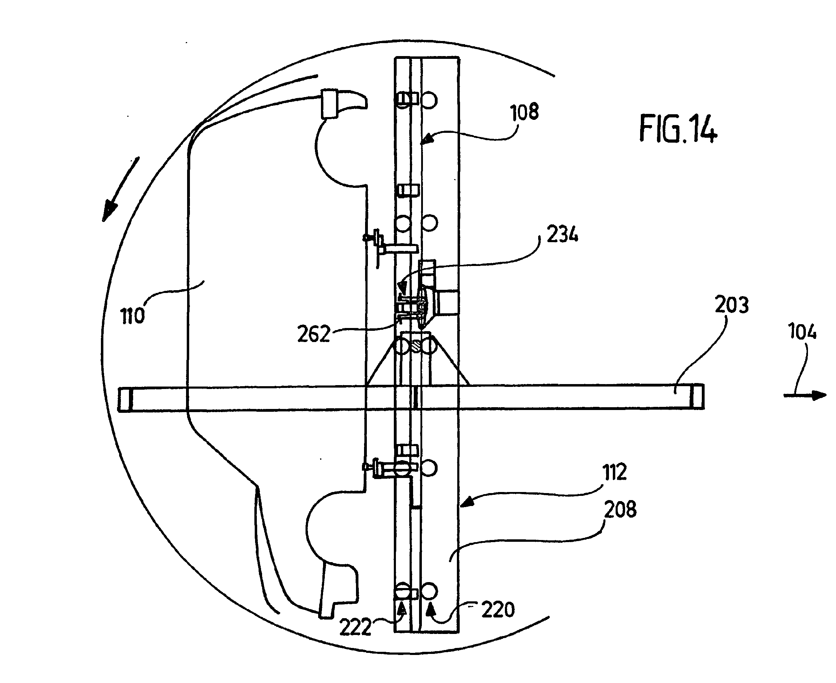

Die in Fig. 14 dargestellte Zwischenstellung der Fahrzeugkarosserie 110 und des Skidrahmens 108 wird nach einer Drehung des Drehrahmens 196 um einen Winkel von 90° erreicht. In dieser Zwischenstellung wird das Gewicht der Fahrzeugkarosserie 110 und des Skidrahmens 108 von dem in dieser Stellung unteren der beiden Klemmelemente 262 der Klemmeinrichtung 234 getragen.

In der in Fig. 15 dargestellten Kopfüberstellung der Fahrzeugkarosserie 110 wird deren Gewicht und das des Skidrahmens 108 von den Tragkörpern 224 der Tragrollen 214 der oberen Rollenbahn 222 getragen.

Nach Beendigung des Drehvorgangs des Drehrahmens 196 wird die Klemmeinrichtung 234 durch Drehung der Antriebswelle 242 um 180 ° wieder in deren Offenstellung überführt, in welcher die eingeklemmte Querstrebe 160 des Skidrahmens 108 freigegeben ist.

Anschließend wird der Skidrahmen 108 mit der Fahrzeugkarosserie 110 in Kopfüberstellung längs der Förderrichtung 104 durch Antreiben der Tragrolle 214 der oberen Rollenbahn 222 aus der eingangsseitigen Drehvorrichtung 112 hinaus und in die eingangsseitige Hubstation 114 hinein gefördert.

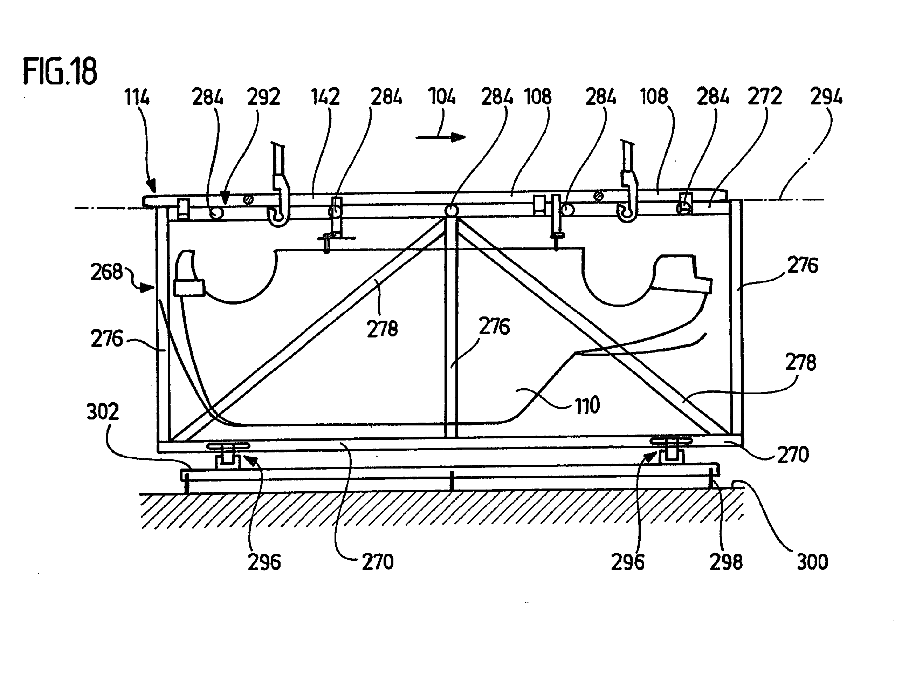

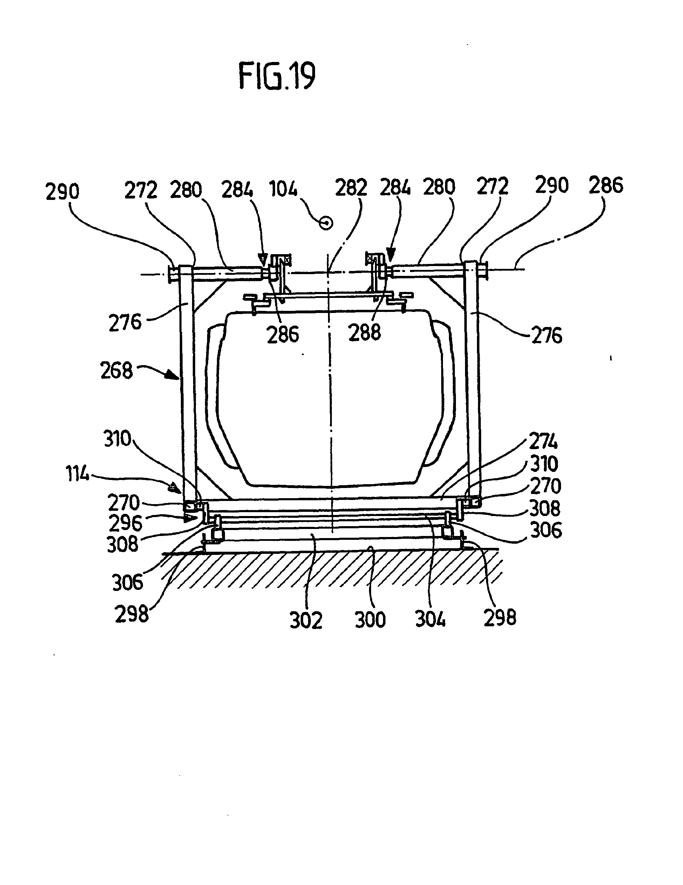

Wie aus den Figuren 18 und 19 zu ersehen ist, umfaßt die Hubstation 114 einen Hubrahmen 268 mit im wesentlichen quaderförmiger Außenkontur, welcher aus parallel zur Förderrichtung 104 ausgerichteten unteren Längsträgern 270 und oberen Längsträgern 272, die beiden unteren Längsträger 270 miteinander verbindenden Querträgern 274, die unteren Längsträger 270 mit den oberen Längsträgern 272 verbindenden horizontal ausgerichteten Stützen 276 und die Verwindungssteifigkeit des Hubrahmens 268 erhöhenden Diagonalstreben 278 zusammengesetzt ist.

Wie aus Fig. 19 zu ersehen ist, erstrecken sich von beiden oberen Längsträgern 272 aus Lagerbuchsen 280 zu einer Mittelebene 282 des Hubrahmens 268 hin.

In diesen Lagerbuchsen 280 sind Tragrollen 284 um senkrecht zur Förderrichtung 104 ausgerichtete Drehachsen 286 drehbar gelagert.

Jede der Tragrollen 284 weist an einem inneren, der Mittelebene 282 des Hubrahmens 268 zugewandten Ende je einen zylindrischen Tragkörper 286 und einen Spurkranz 288 auf.

An einem der Mittelebene 282 abgewandten, sich seitlich über den Hubrahmen 268 hinaus erstreckenden Ende ist jede der Tragrollen 284 mit einer Riemenscheibe 290 versehen. Alle Riemenscheiben 290 stehen über (nicht dargestellte) Zahnriemen mit einem oder mehreren (ebenfalls nicht dargestellten) Antriebsmotoren in Verbindung, durch welche die Tragrollen 284 zu einer Drehbewegung antreibbar sind.

Wie aus Fig. 18 zu ersehen ist, sind in jedem der oberen Längsträger 272 mehrere, beispielsweise jeweils fünf, Tragrollen 284 in der Förderrichtung 104 äquidistant hintereinander angeordnet. Die an den oberen Längsträgern 272 des Hubrahmens 268 angeordneten Tragrollen 284 bilden somit zusammen eine Rollenbahn 292 der Hubstation 114 für die Skidrahmen 108.

Die Tragkörper 286 der Tragrollen 284 weisen eine gemeinsame obere Tangentialebene auf, welche eine Stützfläche 294 für die Skidrahmen 108 bildet.

In der in den Figuren 18 und 19 dargestellten angehobenen Stellung des Hubrahmens 268 liegt die Stützfläche 294 der Rollenbahn 292 der Hubstation 114 auf derselben Höhe wie die Stützfläche 232 der oberen Rollenbahn 222 der Drehvorrichtung 112, so daß die Skidrahmen 108 nach erfolgter Drehung in der eingangsseitigen Drehvorrichtung 112 horizontal von der oberen Rollenbahn 222 der Drehvorrichtung 112 auf die Rollenbahn 292 der Hubstation 114 gefördert werden können.

Ist ein Skidrahmen 108 mit daran angeordneter Fahrzeugkarosserie 110 in die Hubstation 114 eingelaufen, so kann der Hubrahmen 268 mittels einer Hubeinrichtung 296 abgesenkt werden, welche unterhalb des Hubrahmens 268 auf einem mittels Stützfüßen 298 auf einem Untergrund 300 getragenen ortsfesten Rahmen 302 angeordnet ist.

Die Hubeinrichtung 296 umfaßt zwei sich senkrecht zur Förderrichtung 104 erstreckende Hubantriebswellen 304 (Fig. 19), welche in von dem ortsfesten Rahmen 302 getragenen Lagerböcken 306 drehbar gelagert sind.

An beiden Enden jeder Hubantriebswelle 304 ist jeweils ein Ende eines Exzenterhebels 308 drehfest festgelegt, dessen freies Ende eine Führungsrolle 310 trägt.

Mittels der jeweiligen Führungsrolle 310 ist jeder der Exzenterhebel 308 mit seinem der Hubantriebswelle 304 abgewandten Ende in einem an der Innenseite jeweils eines der unteren Längsträger 270 des Hubrahmens 268 angeordneten Führungsprofil 312 mit U-förmigem Querschnitt in der Längsrichtung des Hubrahmens 268 verschieblich geführt.

Außerdem ist der Hubrahmen 268 mittels eines (nicht dargestellten) beweglichen Winkelprofils, an dem Führungsrollen drehbar gelagert sind, an einem (nicht dargestellten) stationären Winkelprofil, das an dem ortsfesten Rahmen 302 festgelegt ist und an dem die Führungsrollen des beweglichen Winkelprofils abrollen, in vertikaler Richtung geführt.

Durch synchrones Drehen der Hubantriebswellen 304 mittels eines (nicht dargestellten) Drehantriebs kann somit der Hubrahmen 268 aus der in den Figuren 18 und 19 dargestellten angehobenen Stellung, in welcher die Exzenterhebel 308 sich von der jeweiligen Hubantriebswelle 304 aus senkrecht nach oben erstrecken, in eine (nicht dargestellte) abgesenkte Stellung des Hubrahmens 268 überführt werden, in welcher die Exzenterhebel 308 sich von der jeweiligen Hubantriebswelle 304 aus senkrecht nach unten erstrecken.

Hierbei bewegen sich der Hubrahmen 268, der sich an der Stützfläche 294 der Rollenbahn 292 abstützende Skidrahmen 108 und die am Skidrahmen angeordnete Fahrzeugkarosserie 110 vertikal nach unten. Durch diese nach unten gerichtete Bewegung des Skidrahmens 108 wird der Skidrahmen mit den Einhängezapfen 188 seiner Einhängebereiche 184 in Tragehaken 314 der Pendel 116 des Pendelförderers 118 eingehängt, welche (auf noch näher zu beschreibende Weise) mittels des Fördermittels 120 zwischen den Tragrollen 284 der Rollenbahn 292 der Hubstation 114 hindurch längs der Förderrichtung 104 durch die Hubstation 114 bewegt werden.

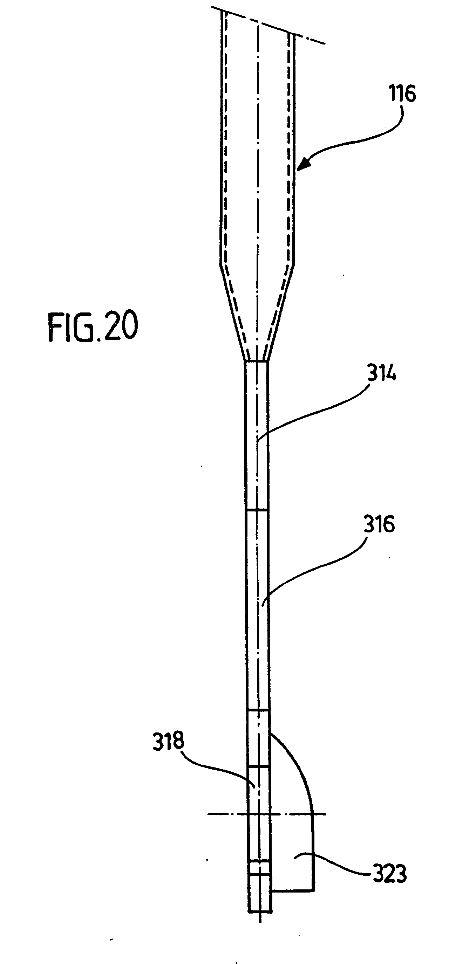

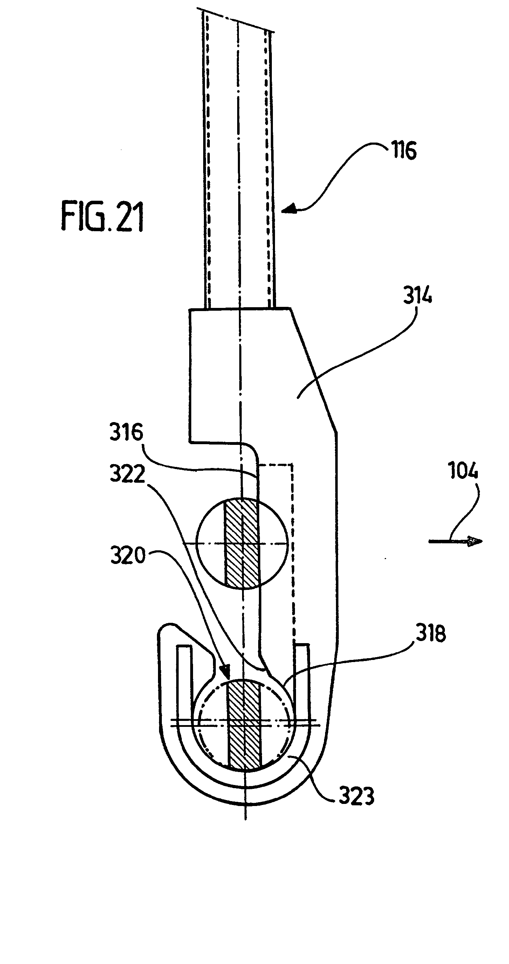

Wie aus den Figuren 20 und 21 zu ersehen ist, weist jeder der Tragehaken 314 der Pendel 116 eine in der Förderrichtung 104 gesehen hintere vertikale Anschlagfläche 316 und eine sich nach unten an die Anschlagfläche 316 anschließende bogenförmige Tragefläche 318 auf, welche sich über eine Bogenwinkel von ungefähr 310° erstreckt und so eine Aufnahme 320 für einen der Einhängezapfen 188 des Skidrahmens 108 umschließt.

Durch die Rollenbahn 292 der Hubstation 114 angetrieben, bewegt sich der auf dem Hubrahmen 268 getragene Skidrahmen 108 schneller in der Förderrichtung 104 nach vorne als die Pendel 116 des Pendelförderers 118. Dadurch stoßen die Einhängezapfen 188 des Skidrahmens 108 von hinten gegen die vertikale Anschlagfläche 316 jeweils eines Tragehakens 314 an.

Im Verlauf der nach diesem Anstoßen erfolgenden Absenkbewegung des Hubrahmens 268 bewegt sich jeder Einhängezapfen 188 längs der Anschlagfläche 316 nach unten durch eine von der Tragefläche 318 ausgesparte Eintrittsöffnung 322 bis in die Aufnahme 320 im unteren Bereich des Tragehakens 314 hinein. Ist der jeweilige Einhängezapfen 188 am unteren Ende der Aufnahme 320 angelangt, so sitzt er mit seiner unteren gekrümmten Seitenfläche 192 auf einem unteren Bereich der Tragefläche 318 auf, so daß der Skidrahmen 108 bei weiterer Abwärtsbewegung des Hubrahmens 268 von der Rollenbahn 292 der Hubstation 114 abgehoben wird und nunmehr allein von den Tragehaken 314 der Pendel 116 des Pendelförderers 118 getragen und mit denselben längs der Förderrichtung 104 vorwärtsbewegt wird.

Im eingehängten Zustand ruhen die zylindrischen Abschnitte 186 der Einhängebereiche 184 des Skidrahmens 108 auf seitlich an den Tragehaken 314 angeordneten U-förmigen Verstärkungselementen 323.

An jeweils vier Pendeln 116 hängend, wird der Skidrahmen 108 mit der in Kopfüberstellung an demselben angeordneten Fahrzeugkarosserie 110 durch den horizontalen Einlaufabschnitt 122 des Pendelförderers 116 gefördert.

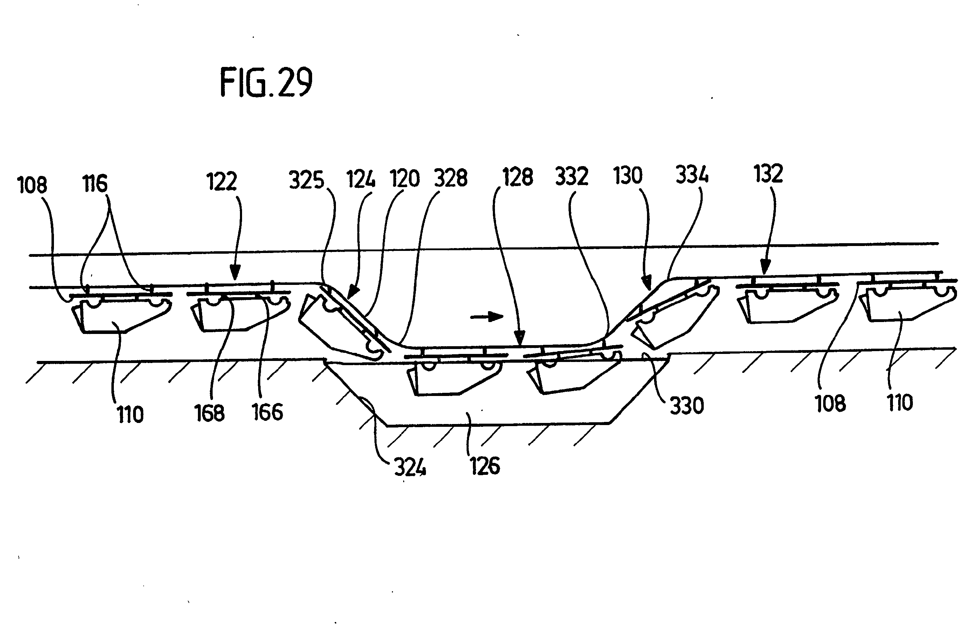

Der Weg einer an einem Skidrahmen 108 in Kopfüberstellung angeordneten Fahrzeugkarosserie 110 durch die Kabine 123 ist in Fig. 29 schematisch dargestellt.

Der horizontale Einlaufabschnitt 122 des Pendelförderers 116 geht über einen vertikalen Bogen 325 in den Eintauchabschnitt 124 über, in welchem das Fördermittel 120, mit dem die Pendel 116 schwenkbar verbunden sind, unter einem Winkel von beispielsweise ungefähr 45° gegen die Horizontale nach unten geführt ist.

Unter diesem schrägen Eintauchabschnitt 124 des Pendelförderers 118 ist eine Einlaufschräge 324 des Behandlungsbades 126 angeordnet. Die Neigung der Einlaufschräge 324 ist im wesentlichen gleich groß wie die Neigung des schrägen Eintauchabschnittes 124 des Pendelförderers 118.

Da während des Transports durch den schrägen Eintauchabschnitt 124 die in Förderrichtung 104 vorderen Pendel 116 tiefer angeordnet sind als die in Förderrichtung hinteren Pendel 116, dreht sich der an den Pendeln 116 eingehängte Skidrahmen 108 relativ zu den stets vertikal ausgerichteten Pendeln 116 um einen Winkel, welcher dem Neigungswinkel des Eintauchabschnitts 124 gegen die Horizontale entspricht, also beispielsweise um 45°.

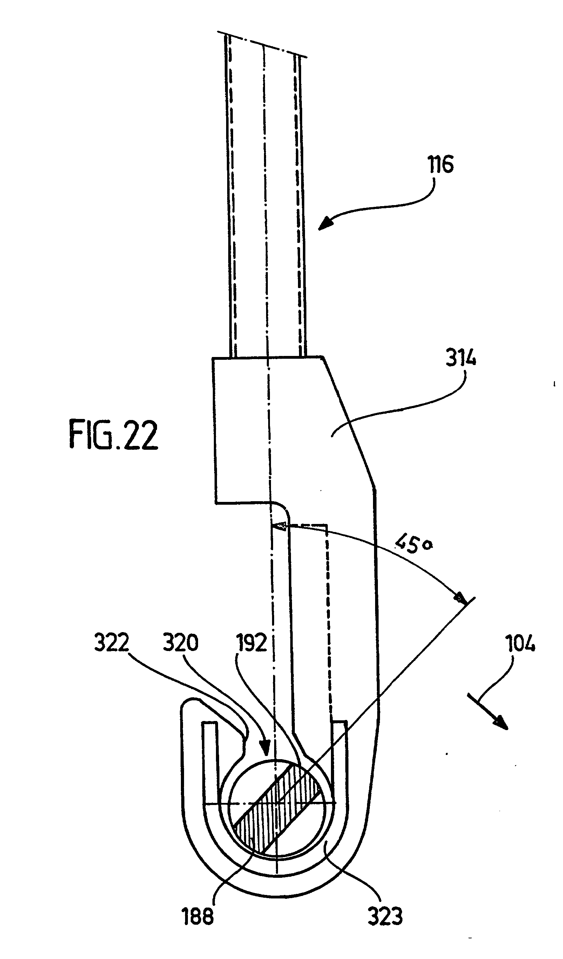

Damit drehen sich auch die Einhängezapfen 188 in den Aufnahmen 320 der Tragehaken 314 um diesen Winkel, wie in Fig. 22 dargestellt.

Dadurch liegt während des Transports durch den schrägen Eintauchabschnitt 124 die obere gekrümmte Seitenfläche 192 des Einhängezapfens 188 nicht mehr unterhalb der Eingangsöffnung 322 der Aufnahme 320 an dem Tragehaken 314, sondern vertikal unterhalb eines der Eingangsöffnung 322 benachbarten Bereichs der Tragefläche 318. Der Einhängezapfen 188 kann daher nicht mehr durch eine vertikale Bewegung aus der Aufnahme 320 des Tragehakens 314 herausbewegt werden. Vielmehr schlägt der Einhängezapfen 188 bei einer vertikalen Aufwärtsbewegung, beispielsweise durch ein Aufschwimmen der Fahrzeugkarosserie 110 beim Eintauchen in das Behandlungsbad 126, an dem vorstehend genannten oberen Bereich der Tragefläche 318 an, welche ein weiteres Anheben des Einhängezapfens 188 relativ zum Tragehaken 314 und somit ein Aushängen aus dem Pendel 116 verhindert.

Um den Eintauchabschnitt und somit die erforderliche Gesamtlänge des Behandlungsbades 126 zu verkürzen, kann auch ein größerer Neigungswinkel des Eintauchabschnitts, beispielsweise 60°, vorgesehen werden.

Da die Fahrzeugkarosserie 110 in der Kopfüberstellung in das Behandlungsbad 126 eintaucht, ist gewährleistet, daß die vorderste Fensteröffnung (Frontscheibenöffnung) der Fahrzeugkarosserie 110 gleichzeitig oder nur kurz nach der Vorderseite der Bodengruppe 173 in das Behandlungsbad 126 eintaucht. Da die Frontscheibenöffnung und die weiteren Fensteröffnungen 174 der Flüssigkeit im Behandlungsbad 126 einen großen Eintrittsquerschnitt für ein Eindringen in das Innere der Fahrzeugkarosserie 110 bieten, ist der Eintauchwiderstand, den die Fahrzeugkarosserie 110 in der Kopfüberstellung der Flüssigkeit des Behandlungsbads 126 entgegengesetzt, deutlich geringer als der Eintauchwiderstand, den eine Fahrzeugkarosserie 110 in der Standardstellung, das heißt mit unterhalb der Fensteröffnungen 174 angeordneter Bodengruppe 173, der Flüssigkeit des Behandlungsbades 126 entgegensetzen würde. Bei in Standardstellung ins Behandlungsbad 126 eintauchender Fahrzeugkarosserie 110 tauchen nämlich die Fensteröffnungen 174 erst lange nach der Bodengruppe 173 in die Flüssigkeit ein, so daß der Eintauchwiderstand in diesem Fall maßgeblich durch die nur kleine Eintrittsquerschnitte für die Flüssigkeit des Behandlungsbads 126 aufweisende Bodengruppe 173 der Fahrzeugkarosserie 110 bestimmt wird.

Wie aus Fig. 29 zu ersehen ist, geht der schräge Eintauchabschnitt 124 des Pendelförderers 118 über einen vertikalen Bogen 328 in den horizontalen Behandlungsbadabschnitt 128 über.

Durch diesen Behandlungsbadabschnitt 128 wird die Fahrzeugkarosserie 110 in der Kopfüberstellung während der vorgeschriebenen Mindesttauchzeit, beispielsweise drei Minuten, gefördert. Bei einer Mindesttauchzeit von drei Minuten beträgt die Gesamtlänge des Behandlungsbades 126 typischerweise 16 Meter.

Wie aus Fig. 29 zu ersehen ist, werden der vertikale Abstand des Fördermittels 120 von dem Behandlungsbadspiegel 330 und die Länge der Pendel 116 so gewählt, daß allenfalls die Quertraversen 166, 168 des Skidrahmens 108, nicht jedoch dessen Skidkufen 142 in das Behandlungsbad 126 eintauchen.

Handelt es sich bei dem Behandlungsbad 126 um ein Lackierbad, beispielsweise ein kataphoretisches Tauchlackierbad, so wird durch diese Maßnahme verhindert, daß die Skidkufen 142 mitlackiert werden, so daß die Skidkufen 142 erst nach einer größeren Anzahl von Durchläufen durch die Behandlungsvorrichtung 100 gereinigt werden müssen.

Dadurch, daß in dem horizontalen Behandlungsbadabschnitt 128 das Dach 176 der Fahrzeugkarosserie 110 nach unten hängt, können sich keine Luftblasen oder Schaum aus dem Innenraum der Fahrzeugkarosserie 110 unterhalb des Daches 176 ansammeln, wie dies häufig der Fall ist, wenn eine Fahrzeugkarosserie in Standardstellung durch ein Behandlungsbad gefördert wird. Vielmehr können solche Luftblasen und Schaum bei in Kopfüberstellung durch das Behandlungsbad 126 geförderter Fahrzeugkarosserie 110 durch Auslauföffnungen im Bodenbereich der Fahrzeugkarosserie 110 nach oben aus dem Innenraum der Fahrzeugkarosserie 110 entweichen. Hierdurch wird vermieden, daß Teile der Fahrzeugkarosserie 110 aufgrund von Luftblasen oder Schaum nicht in Kontakt mit der Flüssigkeit des Behandlungsbades 126 kommen und somit nicht der gewünschten Behandlung unterzogen, also beispielsweise gereinigt, entfettet oder lackiert, werden.

Ferner hängen beim Transport der Fahrzeugkarosserie 110 durch den Behandlungsbadabschnitt 128 in Kopfüberstellung das Dach 176 und die Motorhaube 180 nach unten, so daß sich auf diesen besonders kritischen Sichtflächen der Fahrzeugkarosserie 110 kein Schmutz aus dem Behandlungsbad 126 absetzen kann. Somit werden insbesondere auf den ausgedehnten waagrechten Sichtflächen der Fahrzeugkarosserie 110 Behandlungsfehler, beispielsweise Lackierfehler, aufgrund von sedimentierten Schmutzpartikeln vermieden.

Am Ende des Behandlungsbadabschnitts 128 geht derselbe über einen weiteren vertikalen Bogen 332 in den unter einem Winkel von beispielsweise 45° gegen die Horizontale schräg nach oben verlaufenden Austauchabschnitt 130 über, welcher über einer Auslaufschräge 326 des Behandlungsbads 126 mit im wesentlichen derselben Neigung angeordnet ist.

Durch die Aufwärtsbewegung der Pendel 116 in dem Austauchabschnitt 130 wird die Fahrzeugkarosserie 110 wieder aus dem Behandlungsbad 126 herausgehoben.

Da sich die Fahrzeugkarosserie 110 in der Kopfüberstellung befindet, verlassen die hinteren Fensteröffnungen 174 der Fahrzeugkarosserie 110 das Behandlungsbad 126 als letztes, so daß die im Innern der Fahrzeugkarosserie 110 befindliche Flüssigkeit durch diese großen Austrittsöffnungen vollständig und markierungsfrei auslaufen kann.

Durch einen weiteren vertikalen Bogen 334 geht der schräge Austauchabschnitt 130 des Pendelförderers 118 in den horizontalen Auslaufabschnitt 132 über, durch den der Skidrahmen 108 mit der daran angeordneten Fahrzeugkarosserie 110 in Kopfüberstellung in die ausgangsseitige Hubstation 134 gefördert wird.

Die ausgangsseitige Hubstation 134 ist in derselben Weise aufgebaut wie die eingangsseitige Hubstation 114, auf deren vorstehende Beschreibung insoweit Bezug genommen wird.

In der ausgangsseitigen Hubstation 134 werden die Skidrahmen 108 mit den daran angeordneten Fahrzeugkarosserien 110 in Kopfüberstellung durch Anheben des Hubrahmens 268 aus den Pendeln 116 herausgehoben und auf die Tragrollen 284 der Rollenbahn 292 der Hubstation 134 aufgesetzt.

Ein auf die Rollenbahn 292 der ausgangsseitigen Hubstation 134 aufgesetzter Skidrahmen 108 wird durch Antreiben der Tragrollen 284 dieser Rollenbahn in die ausgangsseitige Drehvorrichtung 136 gefördert.

Die ausgangsseitige Drehvorrichtung 136 ist in derselben Weise aufgebaut wie die eingangsseitige Drehvorrichtung 112, auf deren vorstehende Beschreibung insoweit Bezug genommen wird.

Ein mit seinen Skidkufen 142 zwischen die obere Rollenbahn 222 und die untere Rollenbahn 220 der ausgangsseitigen Drehvorrichtung 136 eingelaufener Skidrahmen 108 mit daran angeordneter Fahrzeugkarosserie 110 wird auf die bereits vorstehend beschriebene Weise mittels einer Klemmeinrichtung 234 der Drehvorrichtung 136 an dem Drehrahmen 196 arretiert. Anschließend wird die Fahrzeugkarosserie 110 durch Drehung des Drehrahmens 196 der ausgangsseitigen Drehvorrichtung 136 um 180° in die Standardstellung zurücküberführt.

Anschließend wird die Arretierung des Skidrahmens 108 an dem Drehrahmen 196 gelöst und der Skidrahmen 108 mit der darauf angeordneten Karosserie 110 durch Antreiben der unteren Rollenbahn 220 aus der ausgangsseitigen Drehvorrichtung 136 hinaus in die ausgangsseitige Rollenbahn 140 und von dieser zu einer weiteren Behandlungsvorrichtung oder zu einem weiteren Herstellungsabschnitt gefördert.

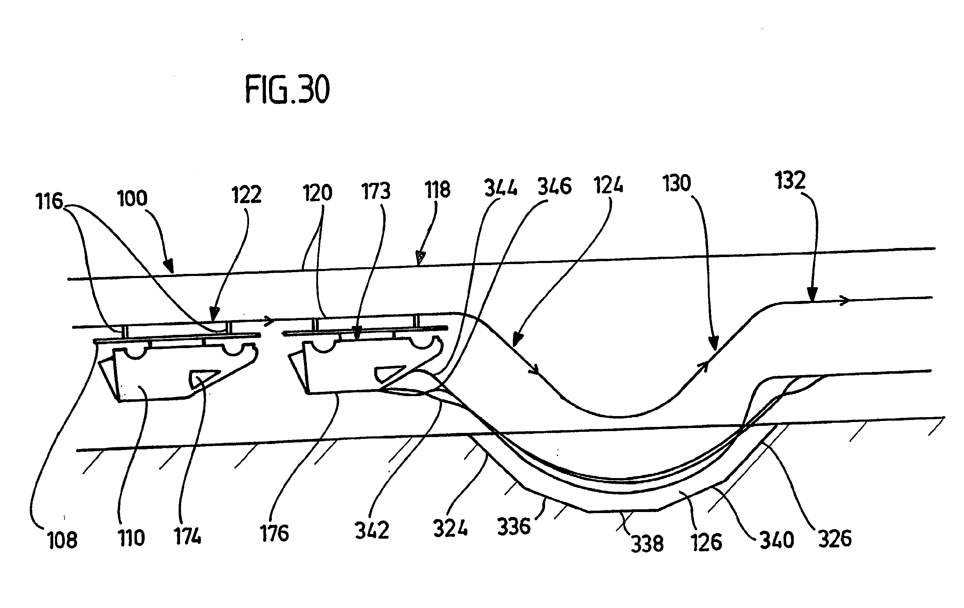

Bei einer in Fig. 30 dargestellten Variante der Behandlungsvorrichtung 100 ist das Behandlungsbad 126 deutlich kürzer ausgebildet als bei der vorstehend beschriebenen Ausführungsform und umfaßt neben der Einlaufschräge 324, deren Neigung der Neigung des Eintauchabschnitts 124 entspricht, einen darauf folgenden Schrägabschnitt 336 mit geringerer Neigung, einen hierauf folgenden horizontalen Abschnitt 338, einen sich hieran anschließenden weiteren Schrägabschnitt 340, der unter demselben Winkel gegen die Horizontale ansteigt wie der erste schräge Abschnitt 336 und eine sich daran anschließende Auslaufschräge 326, deren Neigung der Neigung des Austauchabschnitts 130 des Pendelförderers 118 entspricht.

Das Behandlungsbad 126 dieser Ausführungsform ist so ausgebildet, daß es ein Eintauchen sämtlicher Bereiche der Fahrzeugkarosserie 110 in Kopfüberstellung, jedoch kein längeres Verweilen der Fahrzeugkarosserie 110 in dem Behandlungsbad 126 erlaubt.

Die Bodenbereiche des Behandlungsbads 126 dieser Ausführungsform sind möglichst weitgehend den Bahnverläufen von Punkten des Daches 176 der Fahrzeugkarosserie 110 angepaßt; als Beispiele für solche Bahnverläufe sind in Fig. 30 die Bahnkurve 342 eines Punkts der vorderen Dachkante, die Bahnkurve 344 eines Punkts der hinteren Dachkante und die Bahnkurve 346 eines Punkts des Daches zwischen der vorderen Dachkante und

der hinteren Dachkante angegeben.

Die Gesamtheit aller Bahnkurven der Punkte der Fahrzeugkarosserie 110 definieren zusammen die Eintauchkontur der Fahrzeugkarosserie 110, welcher sich der Boden des Behandlungsbades 126 möglichst gut anpassen muß, um das Volumen des Behandlungsbades 126 möglichst klein zu halten.

Da die Fahrzeugkarosserie 110 in Kopfüberstellung in das Behandlungsbad 126 gefördert wird, ergibt sich eine wesentlich günstigere Eintauchkontur als in dem Fall, in dem die Fahrzeugkarosserie in Standardstellung in das Behandlungsbad gefördert wird, da die Fahrzeugkarosserie 110 im Bereich der Fensteröffnungen 174 und des Daches 176 eine geringere Längsausdehnung aufweist als im Bereich der Bodengruppe 173.

Das Behandlungsbad 126 kann daher kürzer ausgebildet sein und ein geringeres Badvolumen aufweisen als in dem Fall, in welchem die Fahrzeugkarosserie in der Standardstellung durch das Behandlungsbad gefördert wird.

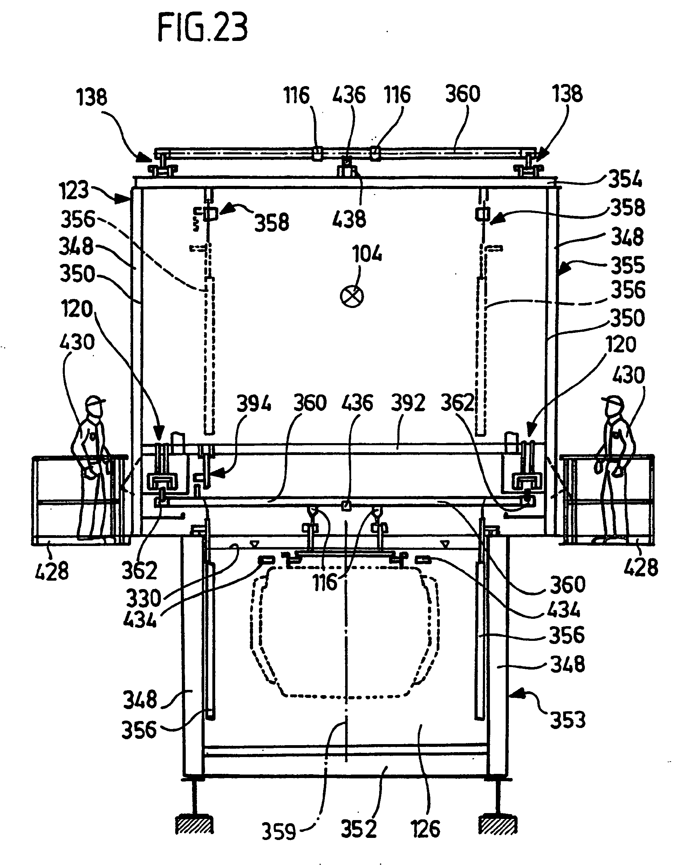

Anhand der Fig. 23 bis 26 soll im folgenden näher erläutert werden, auf welche Weise die Pendel 116 mit dem Fördermittel 120 des Pendelförderers 118 verbunden sind und wie das Fördermittel 120 im einzelnen aufgebaut ist.

Die Fig. 23 zeigt einen Querschnitt durch die Kabine 123 eines Pendelförderers 118, welcher ein zweisträngiges Fördermittel 120 aufweist, im Bereich des Behandlungsbadabschnittes 128.

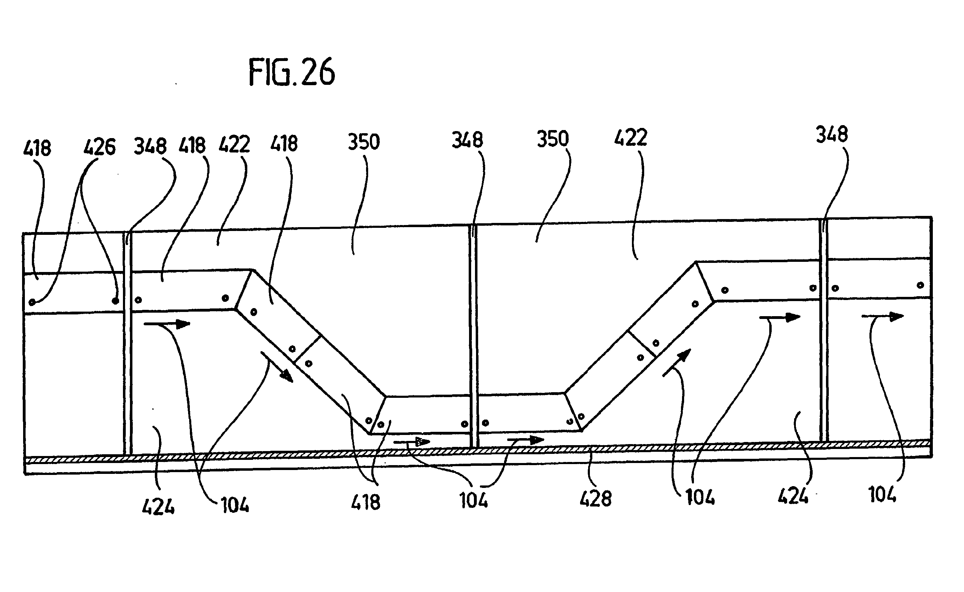

Die Kabine 123 umfaßt vertikale Stützträger 348, zwischen denen sich ebene, vertikale Seitenwände 350 erstrecken (siehe auch Fig. 26). Ferner ist die Kabine 123 nach unten durch eine Bodenwand 352 und nach oben durch eine Deckenwand 354 abgeschlossen.

Die Bodenwand 352 trägt das Behandlungsbad 126, dessen Flüssigkeitsspiegel mit 330 bezeichnet ist.

Das Behandlungsbad 126 ist in einem unteren Bereich 353 der Kabine 123 untergebracht, welcher eine geringere Breite aufweist als der obere Bereich 355 der Kabine 123.

Der Boden des Behandlungsbades 126 ist leicht geneigt, um ein vollständiges Abfließen der Badflüssigkeit zu einer Abflußöffnung für Reinigungs- und Wartungszwecke zu ermöglichen.

Das in Fig. 23 dargestellte Behandlungsbad 126 ist ein kataphoretisches Tauchlackierbad. Längs beider Längsseiten des Behandlungsbades 126 sind Anoden 356 in das Behandlungsbad 126 eingetaucht, welche mittels Kettenzügen 358 zu Wartungszwecken aus dem Behandlungsbad 126 herausgehoben werden können. Die angehobene Stellung der Anoden 356 ist in Fig. 23 in gebrochenen Linien dargestellt.

Eine an einem Skidrahmen 108 eingehängte Fahrzeugkarosserie 110 in Kopfüberstellung ist in das Flüssigkeitsbad 126 eingetaucht.

Der Skidrahmen 108 ist in der vorstehend bereits beschriebenen Weise in Pendel 116 des Pendelförderers 118 eingehängt.

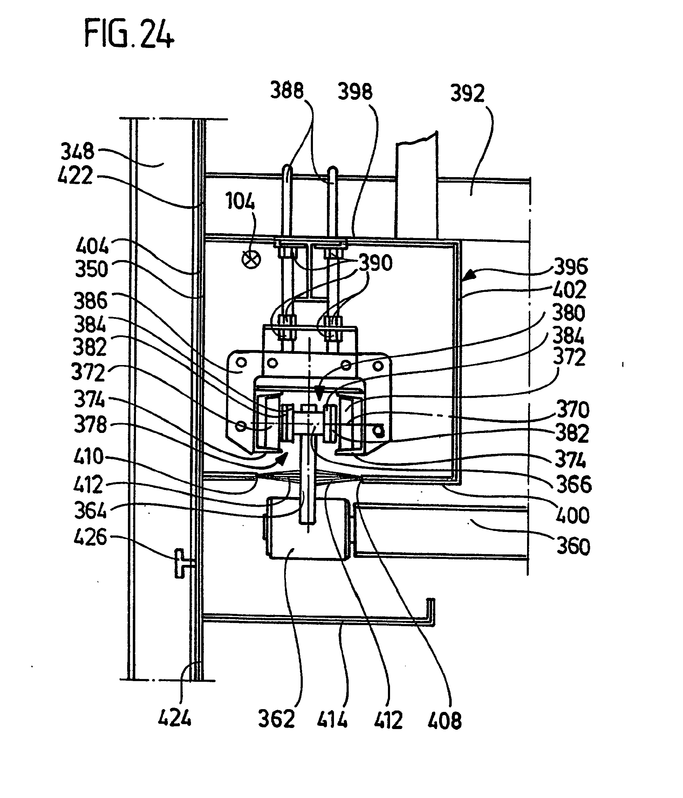

Wie aus Fig. 23 zu ersehen ist, sind jeweils zwei zu einer Mittelebene 359 der Kabine 123 symmetrisch angeordnete Pendel 116 an einer gemeinsamen Pendelquertraverse 360 festgelegt, welche an ihren beiden Enden an jeweils einer Lagerhülse 362 schwenkbar gelagert ist (Fig. 24).

Jede der Lagerhülsen 362 ist über jeweils eine Haltestange 364 an jeweils einem Verbindungsglied 366 gehalten, welches mit einer Förderkette 380 starr verbunden ist, die sich aus in der Förderrichtung 104 aufeinanderfolgenden innenliegenden Kettenlaschen 382 und außenliegenden Kettenlaschen 384 zusammensetzt. Die Kettenlaschen 382 und 384 sind jeweils paarweise quer zur Förderrichtung 104 voneinander beabstandet angeordnet. Längs der Förderrichtung 104 aufeinanderfolgende Kettenlaschen sind in einer vertikalen Ebene schwenkbar gelenkig miteinander verbunden, so daß die Förderkette 380 Bögen in dieser vertikalen Ebene beschreiben kann.

Die starr mit der Förderkette 380 verbundenen Verbindungsglieder 366 sind stets senkrecht zur Förderrichtung 104 ausgerichtet; die Pendel 116 sind aufgrund der schwenkbaren Lagerung der Pendelquertraversen 360 an den Lagerhülsen 362 auch in schrägen Förderabschnitten stets vertikal ausgerichtet.

Die beiden seitlich über die Kettenlaschen der Förderkette 380 vorstehenden Enden jedes Verbindungsglieds 366 tragen jeweils eine Führungsrolle 372.

Die Führungsrollen 372 rollen auf den unteren Führungsschenkeln 374 zweier Führungs-Profilschienen 376 ab, welche sich längs der Förderrichtung 104 erstrecken und im wesentlichen C-förmige Querschnitte aufweisen, deren offene Seiten einander zugewandt sind.

Die beiden Führungs-Profilschienen 376 bilden zusammen eine Kettenführungsbahn 378, längs welcher sich die Führungsrollen 372, die Verbindungsglieder 366 mit den Lagerhülsen 362 und die daran schwenkbar gelagerten Pendel 116 fortbewegen.

Die Fortbewegung der Führungsrollen 372 wird dabei durch die angetriebene Führungskette 380 bewirkt.

Die beiden die Kettenführungsbahn 378 bildenden Führungs-Profilschienen 376 sind an längs der Förderrichtung 104 in regelmäßigen Abständen aufeinanderfolgenden Aufhängungsklammern 386 festgelegt, welche mittels jeweils zweier Gewindestäbe 388 und auf denselben angeordneter Muttern 390 höhenverstellbar an Aufhängungsquertraversen 392 gehalten sind, welche sich quer zur Förderrichtung 104 zwischen den vertikalen Seitenwänden 350 durch die Kabine 123 erstrecken.

An den Aufhängungsquertraversen 392 sind ferner Kontaktierungselemente 394 (Fig. 23) angeordnet, welche mit den Pendelquertraversen 360 in elektrischem Kontakt stehen, um die Pendel 116 und somit die über die Skidrahmen 108 mit den Pendeln 116 elektrisch leitfähig verbundenen Fahrzeugkarosserien 110 auf das für die kataphoretische Tauchlackierung erforderliche Kathoden-Potential legen zu können.

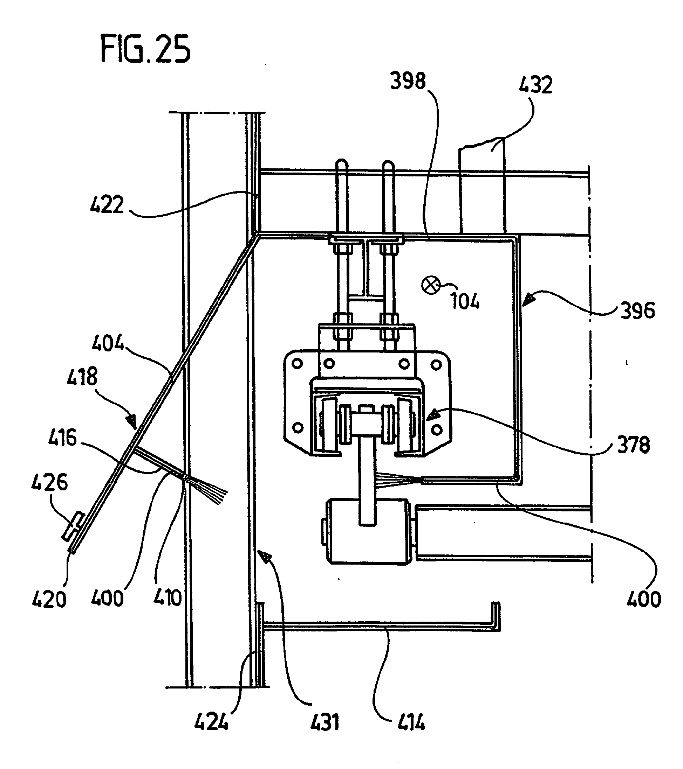

Wie insbesondere aus den Fig. 24 und 25 zu ersehen ist, verläuft jede der beiden Kettenführungsbahnen 378 innerhalb eines Fördermittelkanals 396, welcher einen im wesentlichen rechtwinkligen Querschnitt aufweist und nach oben durch eine Deckenwand 398, nach unten durch eine Bodenwand 400, zur Mittelebene 358 der Kabine 123 hin durch eine innere Seitenwand 402 und auf der der inneren Seitenwand 402 gegenüberliegenden Seite durch eine äußere Seitenwand 404 begrenzt ist.

Um den Durchtritt der Haltestangen 364 nach unten aus dem Fördermittelkanal 396 heraus zu ermöglichen, weist die Bodenwand 400 des Fördermittelkanals 396 einen längs der Förderrichtung 104 verlaufenden Längsschlitz 406 auf, von dessen innerem Rand 408 und von dessen äußerem Rand 410 sich jeweils Bürsten 412 zur Mitte des Längsschlitzes 406 hin erstrecken, um einen Durchtritt von Schmutzpartikeln, beispielsweise von an der Förderkette 380 oder den Führungsrollen 372 abgeriebenen Partikeln, aus dem Innenraum des Fördermittelkanals 396 in den Innenraum der Kabine 123 zu verhindern.

Um trotz der Bürsten 412 durch den Längsschlitz 406 gelangte Schmutzpartikel aufzufangen, ist unterhalb des Längsschlitzes 406 eine sich längs der Förderrichtung 104 erstreckende Schmutzauffangwanne 414 an der vertikalen Seitenwand 350 der Kabine 123 angeordnet.

Wie am besten aus Fig. 25 zu ersehen ist, bilden die äußere Seitenwand 404 des Fördermittelkanals 396 und der zwischen der äußeren Seitenwand 404 und dem äußeren Rand 410 des Längsschlitzes 406 angeordnete Bereich 416 der Bodenwand 400 des Fördermittelkanals 396 Bestandteile einer Wartungsklappe 418, die auf Höhe der Deckenwand 398 des Fördermittelkanals 396 mittels eines (nicht dargestellten) Scharniers um eine horizontale Schwenkachse schwenkbar gehalten ist.

Von dem Bereich 416 der Bodenwand 400 des Fördermittelkanals 396 erstreckt sich die Wartungsklappe 418 weiter nach unten bis zu einem knapp oberhalb der Schmutzauffangwanne 414 angeordneten unteren Rand 420.

Die Wartungsklappe 418 bildet einen Bestandteil der vertikalen Seitenwand 350 der Kabine 123 und fluchtet in ihrem (in Fig. 24 dargestellten) geschlossenen Zustand mit einem oberen Bereich 422 der vertikalen Seitenwand 350, welcher sich nach oben hin an die Wartungsklappe 418 anschließt, und mit einem unteren Bereich 424 der vertikalen Seitenwand 350, welcher sich nach unten an die Wartungsklappe 418 anschließt.

Wie am besten aus Fig. 26 zu ersehen ist, schließen sich längs der Förderrichtung 104 mehrere Wartungsklappen 418 aneinander an, von denen sich jede längs der Förderrichtung 104 über eine Länge von ungefähr zwei Metern erstreckt. Dadurch ist gewährleistet, daß das Gewicht einer einzelnen Wartungsklappe 418 nicht zu groß wird, um die Wartungsklappe 418 manuell von einer Bedienungsperson anheben zu lassen. Um die Wartungsklappen 418 anheben zu können, ist jede derselben mit zwei Betätigungsgriffen 426 versehen.

Wie aus den Fig. 23 und 26 zu ersehen ist, sind an den Außenseiten der vertikalen Seitenwände 350 der Kabine 123 begehbare Wartungsstege 428 angeordnet, auf denen Bedienungspersonen 430 zu den Wartungsklappen 418 gelangen können.

Wie aus Fig. 25 zu ersehen ist, gibt jede Wartungsklappe 418 im geöffneten Zustand eine Wartungsöffnung 431 in der vertikalen Seitenwand 350 der Kabine 123 frei und ermöglicht so den freien Zugang zum Innenraum des jeweiligen Fördermittelkanals 396, um Wartungs- und Reinigungsarbeiten an der im Fördermittelkanal 396 befindlichen Kettenführungsbahn 378 durchführen zu können.

Ferner können bei geöffneter Wartungsklappe 418 die Bürsten 412 gesäubert oder ausgetauscht werden und die Schmutzauffangwanne 414 entleert und gereinigt werden.

Um ein Eindringen von aggressiven chemischen Stoffen, beispielsweise von Fluoriden, aus dem Behandlungsbad 126 in den Fördermittelkanal 396 zu verhindern, ist eine Druckluftzufuhr zu dem Fördermittelkanal 396 vorgesehen, welche ein in der Deckenwand 398 des Fördermittelkanals 396 mündendes Druckluftzuführrohr 432 umfaßt.

Durch über das Druckluftzuführrohr 432 unter Überdruck zugeführte Luft kann der Innenraum des Fördermittelkanals 396 unter einen gegenüber dem Innendruck der Kabine 123 erhöhten Druck gesetzt werden, so daß ein stetiger Luftstrom aus dem Fördermittelkanal 396 durch den Längsschlitz 406 in den Innenraum der Kabine 123 erzeugt wird, welcher ein Eindringen aggressiver chemischer Stoffe aus dem Innenraum der Kabine 123 in den Fördermittelkanal 396 verhindert.

Dadurch ist es möglich, die im Innern des Fördermittelkanals 396 angeordneten Bauelemente, insbesondere die Kettenführungsbahn 378, die Führungsrollen 472 und die Aufhängungsklammern 386 aus gewöhnlichem Stahl herzustellen, welcher keine besondere Widerstandsfähigkeit gegenüber aggressiven chemischen Substanzen aufweisen muß.

Wie aus Fig. 23 zu ersehen ist, sind in dem Behandlungsbad 126 knapp unterhalb des Behandlungsbadspiegels 330 zu beiden Seiten der Mittelebene 358 Schwelleranoden 434 angeordnet, welche dazu erforderlich sind, bei der kataphoretischen Tauchlackierung eine ausreichende Beschichtungsdicke im Bereich der Bodengruppen 173 der Fahrzeugkarosserien 110 zu erzielen.

Da die Fahrzeugkarosserien 110 in Kopfüberstellung durch das Behandlungsbad 126 gefördert werden, können die Schwelleranoden 434 oberhalb der Bahn der Fahrzeugkarosserien 110 nahe des Behandlungsbadspiegels 330 angeordnet werden, wo sie für Wartungszwecke zugänglich sind, ohne daß die Flüssigkeit aus dem Behandlungsbad 126 abgelassen werden muß.

Wie ferner aus Fig. 23 zu ersehen ist, verläuft das Rücklauftrum 138 des Fördermittels 120 des Pendelförderers 118 oberhalb der Deckenwand 354 der Kabine 123. Die Pendelquertraversen 360 werden somit über das Dach der Kabine 123 zurückgefördert, wobei die an den Pendelquertraversen 360 angeordneten Pendel 116 in horizontaler Ausrichtung transportiert werden und sich die Pendelquertraversen 360 mit jeweils einer mittig angeordneten Abstützrolle 436 an einem in Längsrichtung des Daches der Kabine 123 verlaufenden Stützprofil 438 abstützen.

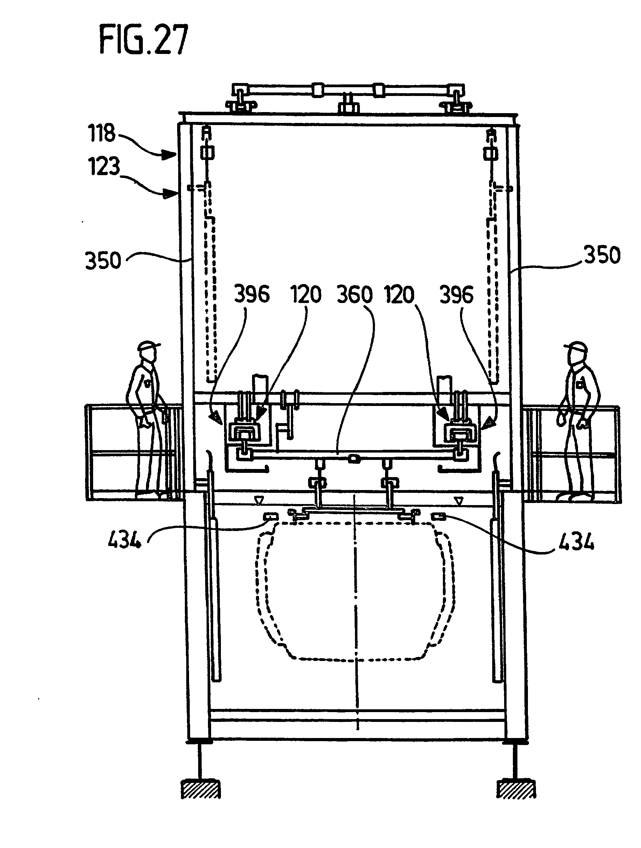

Eine in Fig. 27 dargestellte alternative Ausführungsform des Pendelförderers 118 und der Kabine 123 unterscheidet sich von der in den Fig. 23 bis 26 dargestellten, vorstehend beschriebenen Ausführungsform dadurch, daß die Pendelquertraversen 360 bei dieser Ausführungsform kürzer ausgebildet sind, so daß die beiden Stränge des Fördermittels 120 beide über dem Behandlungsbad 126 verlaufen.

Die beiden Führungsmittelkanäle 396 dieser Ausführungsform sind im Abstand von den vertikalen Seitenwänden 350 der Kabine 123 angeordnet, so daß der Innenraum dieser Fördermittelkanäle 396 nicht von der Außenseite der Kabine 123 aus zugänglich ist.

Die in Fig. 27 dargestellte Ausführungsform der Trocknerkabine 123 baut in ihrem oberhalb des Behandlungsbades 126 angeordneten Teil schmaler als die in den Fig. 23 bis 26 dargestellte Ausführungsform; außerdem fluchten die vertikalen Seitenwände 350 des oberen und des unteren Kabinenteils miteinander, so daß über die gesamte Höhe der Kabine 123 durchgehende Seitenwände verwendet werden können.

Im übrigen stimmt die in Fig. 27 dargestellte alternative Ausführungsform des Pendelförderers und der Kabine hinsichtlich Aufbau und Funktion mit der in den Fig. 23 bis 26 dargestellten Ausführungsform überein, auf deren vorstehende Beschreibung insoweit Bezug genommen wird.

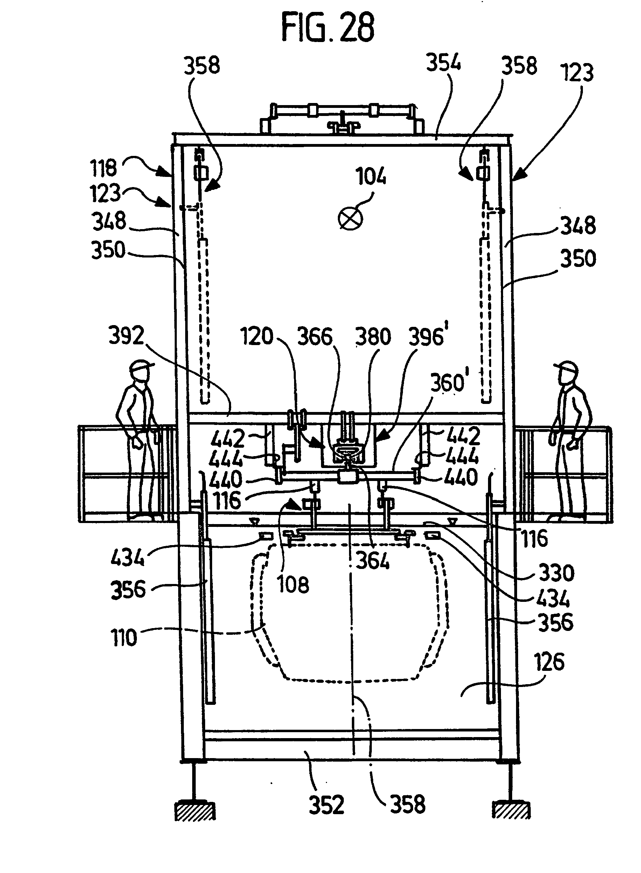

Eine in Fig. 28 dargestellte weitere alternative Ausführungsform des Pendelförderers 118 und der Kabine 123 unterscheidet sich von der in den Fig. 23 bis 26 dargestellten Ausführungsform dadurch, daß statt eines zweisträngigen Fördermittels 120 ein einsträngiges Fördermittel verwendet wird.

Die einzige Förderkette 380 dieser Ausführungsform verläuft innerhalb eines mittig über dem Behandlungsbad 126 angeordneten Fördermittelkanals 396'.

An dem Verbindungsglied 366 der Förderkette 380 ist über eine Haltestange 364 eine mittige Lagerhülse 362' gehalten, in welcher eine Pendelquertraverse 360' schwenkbar gelagert ist. Die beiden Enden der Pendelquertraverse 360' sind mit Führungsrollen 440 versehen, die an sich parallel zur Förderrichtung 104 erstreckenden, an der Aufhängungsquertraverse 392 über Halter 442 gehaltenen Führungs-Winkelprofilschienen 444 geführt sind.

Auch bei dieser Ausführungsform fluchten die oberen und die unteren Bereiche der vertikalen Seitenwände 350 der Kabine 123 miteinander, wie auch bei der in Fig. 27 dargestellten Ausführungsform, so daß über die gesamte Höhe der Kabine 123 durchgehende Seitenwände 350 verwendet werden können.

Im übrigen stimmt die in Fig. 28 dargestellte Ausführungsform des Pendelförderers und der Kabine hinsichtlich Aufbau und Funktion mit der in den Fig. 23 bis 26 dargestellten Ausführungsform überein, auf deren vorstehende Beschreibung insoweit Bezug genommen wird.

## Patentansprüche

1. Verfahren zum Fördern von Fahrzeugkarosserien (110) durch ein Behandlungsbad (126) zur Oberflächenbehandlung der Fahrzeugkarosserien, **dadurch gekennzeichnet, dass** die Fahrzeugkarosserien (110) vor dem Einbringen in das Behandlungsbad (126) aus einer Standardstellung, in welcher Fensteröffnungen (174) der jeweiligen Fahrzeugkarosserie (110) oberhalb der Bodengruppe (173) der Fahrzeugkarosserie (110) angeordnet sind, in eine Kopfüberstellung in welcher die Fensteröffnungen (174) der jeweiligen Fahrzeugkarosserie (110) unterhalb der Bodengruppe (173) der Fahrzeugkarosserie (110) angeordnet sind, überführt werden und dass die Fahrzeugkarosserien (110) anschließend in der Kopfüberstellung in das Behandlungsbad (126) eingebracht, an einem Pendelförderer (118) hängend durch das Behandlungsbad (126) gefördert und aus dem Behandlungsbad (126) wieder ausgebracht werden.

2. Verfahren nach Anspruch 1, **dadurch gekennzeichnet, dass** die Fahrzeugkarosserien (110) nach dem Ausbringen aus dem Behandlungsbad (126) in die Standardstellung zurück überführt werden.

3. Verfahren nach einem der Ansprüche 1 oder 2, **dadurch gekennzeichnet, dass** in der Kopfüberstellung der Fahrzeugkarosserien (110) die Frontscheibenöffnungen der Fahrzeugkarosserien (110) in der Förderrichtung (104) nach vorne weisen.

4. Verfahren nach einem der Ansprüche 1 bis 3, **dadurch gekennzeichnet, dass** die Fahrzeugkarosserien (110) durch eine Drehung, vorzugsweise durch eine Drehung um ungefähr 180°, von der Standardstellung in die Kopfüberstellung überführt werden.

5. Verfahren nach Anspruch 4, **dadurch gekennzeichnet, dass** die Fahrzeugkarosserien (110) durch eine Drehung um eine im wesentlichen senkrecht zu der Förderrichtung (104) ausgerichtete Drehachse (204) von der Standardstellung in die Kopfüberstellung überführt werden.

6. Verfahren nach einem der Ansprüche 1 bis 5, **dadurch gekennzeichnet, dass** die Fahrzeugkarosserien (110) an jeweils einem Skidrahmen (108) angeordnet sind.

7. Verfahren nach Anspruch 6, **dadurch gekennzeichnet, dass** die Skidrahmen (108) in der Kopfüberstellung oberhalb der Fahrzeugkarosserien (110) angeordnet sind.

8. Verfahren nach einem der Ansprüche 6 oder 7, **dadurch gekennzeichnet, dass** Skidrahmen (108) verwendet werden, deren Skidkufen (142) jeweils zwei einander abgewandte Auflageflächen (144, 146) zum Abstützen des Skidrahmens (108) an einer im wesentlichen ebenen Stützfläche (230, 232) einer Rollenbahn (220, 222) aufweisen.

9. Verfahren nach Anspruch 8, **dadurch gekennzeichnet, dass** beim Überführen der Fahrzeugkarosserien (110) von der Standardstellung in die Kopfüberstellung mittels einer Drehvorrichtung (112) beide Auflageflächen (144, 146) der Skidkufen (142) an jeweils einer im wesentlichen ebenen Stützfläche (230, 232) der Drehvorrichtung (112) anliegen.

10. Verfahren nach Anspruch 9, **dadurch gekennzeichnet, dass** mindestens eine der Stützflächen (230, 232) der Drehvorrichtung (112) als gemeinsame Tangentialebene der Tragkörper (224) der Tragrollen (212, 214) einer Rollenbahn (220, 222) ausgebildet ist.

11. Verfahren nach Anspruch 10, **dadurch gekennzeichnet, dass** beide Stützflächen (230, 232) der Drehvorrichtung (112) jeweils als gemeinsame Tangentialebenen der Tragkörper (224) der Tragrollen (212, 214) jeweils einer Rollenbahn (220, 222) ausgebildet sind.

12. Verfahren nach einem der Ansprüche 6 bis 11, **dadurch gekennzeichnet, dass** die Skidkufen (142) der Skidrahmen (108) oberhalb des Behandlungsbadspiegels (330) über das Behandlungsbad (126) hinweg gefördert werden.

13. Verfahren nach einem der Ansprüche 1 bis 12, **dadurch gekennzeichnet, dass** die Fahrzeugkarosserien (110) in der Kopfüberstellung in die Pendel (116) des Pendelförderers (118) eingehängt werden.

14. Verfahren nach einem der Ansprüche 1 bis 13, **dadurch gekennzeichnet, dass** die Pendel (116) des Pendelförderers (118) vollständig oberhalb der an den Pendeln (116) eingehängten Fahrzeugkarosserien (110) angeordnet sind.

15. Verfahren nach einem der Ansprüche 1 bis 14, **dadurch gekennzeichnet, dass** die Pendel (116) des Pendelförderers (118) oberhalb des Behandlungsbadspiegels (330) über das Behandlungsbad (126) hinweg gefördert werden.

16. Verfahren nach einem der Ansprüche 1 bis 15, **dadurch gekennzeichnet, dass** die Pendel (116) des Pendelförderers (118) mittels eines einsträngigen Fördermittels (120) gefördert werden.

17. Verfahren nach einem der Ansprüche 1 bis 15, **dadurch gekennzeichnet, dass** die Pendel (116) des Pendelförderers (118) mittels eines zweisträngigen Fördermittels (120) gefördert werden.

18. Verfahren nach Anspruch 17, **dadurch gekennzeichnet, dass** Führungsbahnen (378) für das Fördermittel (120) über dem Behandlungsbad (126) angeordnet sind.

19. Verfahren nach Anspruch 17, **dadurch gekennzeichnet, dass** Führungsbahnen (378) für das Fördermittel (120) oberhalb des Behandlungsbades (126) und seitlich neben demselben angeordnet sind.

20. Verfahren nach einem der Ansprüche 17 bis 19, **dadurch gekennzeichnet, dass** jeder Strang des Fördermittels (120) jeweils in einem geschlossenen Fördermittelkanal (396; 396') angeordnet ist.

21. Verfahren nach Anspruch 20, **dadurch gekennzeichnet, dass** der Innenraum des Fördermittelkanals (396) gegenüber dem Innenraum einer das Behandlungsbad (126) enthaltenden Kabine (123) auf einem erhöhten Luftdruck gehalten wird.

22. Verfahren nach einem der Ansprüche 1 bis 21, **dadurch gekennzeichnet, dass** das Behandlungsbad (126) ein elektrophoretisches Lackierungsbad ist und in dem Behandlungsbad (126) oberhalb der Bahn der Fahrzeugkarosserien (110) angeordnete Schwelleranoden (434) verwendet werden.

23. Behandlungsvorrichtung zur Oberflächenbehandlung von Fahrzeugkarosserien, umfassend ein Behandlungsbad (126) zur Oberflächenbehandlung der Fahrzeugkarosserien und eine Fördervorrichtung zum Fördern der Fahrzeugkarosserien (110) durch das Behandlungsbad (126) zur Oberflächenbehandlung der Fahrzeugkarosserien,
wobei die Fördervorrichtung einen Förderer (118) umfasst, der die Fahrzeugkarosserien (110) in das Behandlungsbad (126) einbringt, durch das Behandlungsbad (126) fördert und aus dem Behandlungsbad (126) wieder ausbringt,
**dadurch gekennzeichnet,**
**dass** die Fördervorrichtung eine Überführungsvorrichtung umfasst, welche die Fahrzeugkarosserien (110) vor dem Einbringen in das Behandlungsbad (126) aus einer Standardstellung, in welcher Fensteröffnungen (174) der jeweiligen Fahrzeugkarosserie (110) oberhalb der Bodengruppe (173) der Fahrzeugkarosserie (110) angeordnet sind, in eine Kopfüberstellung, in welcher die Fensteröffnungen (174) der jeweiligen Fahrzeugkarosserie (110) unterhalb der Bodengruppe (173) der Fahrzeugkarosserie (110) angeordnet sind, überführt, und dass der Förderer (118) die Fahrzeugkarosserien (110) anschließend in der Kopfüberstellung in das Behandlungsbad (126) einbringt, durch das Behandlungsbad (126) fördert und aus dem Behandlungsbad (126) wieder ausbringt,
wobei der Förderer (118) als Pendelförderer ausgebildet ist, an dem die Fahrzeugkarosserien (110) hängend durch das Behandlungsbad (126) gefördert werden.

24. Behandlungsvorrichtung nach Anspruch 23, **dadurch gekennzeichnet, dass** die Fördervorrichtung (102) eine weitere Überführungsvorrichtung umfasst, welche die Fahrzeugkarosserien (110) nach dem Ausbringen aus dem Behandlungsbad (126) in die Standardstellung zurück überführt.

25. Behandlungsvorrichtung nach einem der Ansprüche 23 oder 24, **dadurch gekennzeichnet, dass** die Überführungsvorrichtung die Fahrzeugkarosserien (110) in eine Kopfüberstellung überführt, in welcher die Frontscheibenöffnungen der Fahrzeugkarosserien (110) in der Förderrichtung (104) nach vorne weisen.

26. Behandlungsvorrichtung nach einem der Ansprüche 23 bis 25, **dadurch gekennzeichnet, dass** die Überführungsvorrichtung als eine Drehvorrichtung (112) ausgebildet ist.

27. Behandlungsvorrichtung nach Anspruch 26, **dadurch gekennzeichnet, dass** die Drehvorrichtung (112) eine im wesentlichen senkrecht zu der Förderrichtung (104) ausgerichtete Drehachse (204) aufweist.

28. Behandlungsvorrichtung nach einem der Ansprüche 23 bis 27, **dadurch gekennzeichnet, dass** die Fördervorrichtung (102) an jeweils einem Skidrahmen (108) angeordnete Fahrzeugkarosserien (110) fördert.

29. Behandlungsvorrichtung nach Anspruch 28, **dadurch gekennzeichnet, dass** die Skidrahmen (108) in der Kopfüberstellung oberhalb der Fahrzeugkarosserien (110) angeordnet sind.

30. Behandlungsvorrichtung nach einem der Ansprüche 28 oder 29, **dadurch gekennzeichnet, dass** die Skidrahmen (108) Skidkufen (142) umfassen, welche jeweils zwei einander abgewandte Auflageflächen (144, 146) zum Abstützen des Skidrahmens (108) an einer im wesentlichen ebenen Stützfläche (230, 232) einer Rollenbahn (220, 222) aufweisen.

31. Behandlungsvorrichtung nach Anspruch 30, **dadurch gekennzeichnet, dass** die Überführungsvorrichtung als Drehvorrichtung (112) ausgebildet ist, welche eine erste Stützfläche (230) und eine zweite Stützfläche (232) aufweist, an welchen die Skidkufen (142) der Skidrahmen (108) beim Überführen der Fahrzeugkarosserien (110) von der Standardstellung in die Kopfüberstellung mit jeweils einer ihrer Auflageflächen (144, 146) anliegen.

32. Behandlungsvorrichtung nach Anspruch 31, **dadurch gekennzeichnet, dass** die Drehvorrichtung (112) mindestens eine Rollenbahn (220, 222) umfasst, deren Tragkörperkuppen eine der Stützflächen (230, 232) der Drehvorrichtung (112) definieren.

33. Behandlungsvorrichtung nach Anspruch 32, **dadurch gekennzeichnet, dass** die Drehvorrichtung (112) zwei Rollenbahnen (220, 222) umfasst, deren Tragkörperkuppen die Stützflächen (230, 232) der Drehvorrichtung (112) definieren.

34. Behandlungsvorrichtung nach einem der Ansprüche 28 bis 33, **dadurch gekennzeichnet, dass** die Skidkufen (142) der Skidrahmen (108) oberhalb des Behandlungsbadspiegels (330) über das Behandlungsbad (126) hinweg gefördert werden.

35. Behandlungsvorrichtung nach einem der Ansprüche 23 bis 34, **dadurch gekennzeichnet, dass** die Fördervorrichtung (102) eine Übergabestation umfasst, in welcher die Fahrzeugkarosserien (110) in der Kopfüberstellung in die Pendel (116) des Pendelförderers eingehängt werden.

36. Behandlungsvorrichtung nach einem der Ansprüche 23 bis 35, **dadurch gekennzeichnet, dass** die Pendel (116) des Pendelförderers vollständig oberhalb der an den Pendeln (116) eingehängten Fahrzeugkarosserien (110) angeordnet sind.

37. Behandlungsvorrichtung nach einem der Ansprüche 23 bis 36, **dadurch gekennzeichnet, dass** die Pendel (116) des Pendelförderers oberhalb des Behandlungsbadspiegels (330) über das Behandlungsbad (126) hinweg gefördert werden.

38. Behandlungsvorrichtung nach einem der Ansprüche 23 bis 37, **dadurch gekennzeichnet, dass** der Pendelförderer ein einsträngiges Fördermittel (120) umfasst.

39. Behandlungsvorrichtung nach einem der Ansprüche 23 bis 37, **dadurch gekennzeichnet, dass** der Pendelförderer ein zweisträngiges Fördermittel (120) umfasst.

40. Behandlungsvorrichtung nach Anspruch 39, **dadurch gekennzeichnet, dass** der Pendelförderer Führungsbahnen (378) für das Fördermittel (120) umfasst, welche über dem Behandlungsbad (126) angeordnet sind.

41. Behandlungsvorrichtung nach Anspruch 39, **dadurch gekennzeichnet, dass** der Pendelförderer Führungsbahenen (378) für das Fördermittel (120) umfasst, welche oberhalb des Behandlungsbades (126) und seitlich neben demselben angeordnet sind.

42. Behandlungsvorrichtung nach einem der Ansprüche 39 bis 41, **dadurch gekennzeichnet, dass** jeder Strang des Fördermittels (120) jeweils in einem geschlossenen Fördermittelkanal (396; 396') angeordnet ist.

43. Behandlungsvorrichtung nach Anspruch 42, **dadurch gekennzeichnet, dass** der Innenraum des Fördermittelkanals (396; 396') gegenüber dem Innenraum einer das Behandlungsbad (126) enthaltenden Kabine (123) auf einem erhöhten Luftdruck gehalten wird.

44. Behandlungsvorrichtung nach einem der Ansprüche 23 bis 43, **dadurch gekennzeichnet, dass** das Behandlungsbad (126) als ein elektrophoretisches Lackierungsbad ausgebildet ist und Schwelleranoden (434) in dem Behandlungsbad (126) oberhalb der Bahn der Fahrzeugkarosserien (110) angeordnet sind.

## Claims

1. Process for conveying vehicle bodies (110) through a treatment bath (126) for the surface treatment of the vehicle bodies, **characterized in that** prior to their introduction into the treatment bath (126) the vehicle bodies (110) are transferred from a standard position where window openings (174) of the respective vehicle body (110) are arranged above the floor pan (173) of the vehicle body (110) into a headfirst position where the window openings (174) of the respective vehicle body (110) are arranged beneath the floor pan (173) of the vehicle body (110) and that the vehicle bodies (110) are subsequently introduced into the treatment bath (126), conveyed through the treatment bath (126) suspended on a pendulum conveyor (118) and brought out of the treatment bath (126) again in the headfirst position.

2. Process as defined in claim 1, **characterized in that** the vehicle bodies (110) are transferred back into the standard position after they have been brought out of the treatment bath (126).

3. Process as defined in one of claims 1 or 2, **characterized in that** in the headfirst position of the vehicle bodies (110) the windscreen openings of the vehicle bodies (110) point forwards in the direction of conveyance (104).

4. Process as defined in any one of claims 1 to 3, **characterized in that** the vehicle bodies (110) are transferred from the standard position into the headfirst position by means of a rotation, preferably by means of a rotation through approximately 180°.

5. Process as defined in claim 4, **characterized in that** the vehicle bodies (110) are transferred from the standard position into the headfirst position by means of a rotation about an axis of rotation (204) aligned essentially at right angles to the direction of conveyance (104).

6. Process as defined in any one of claims 1 to 5, **characterized in that** the vehicle bodies (110) are each arranged on a skid frame (108).

7. Process as defined in claim 6, **characterized in that** the skid frames (108) are arranged above the vehicle bodies (110) in the headfirst position.

8. Process as defined in one of claims 6 or 7, **characterized in that** skid frames (108) are used with skid runners (142) each having two contact surfaces (144, 146) facing away from one another for supporting the skid frame (108) on an essentially flat supporting surface (230, 232) of a roller conveyor (220, 222).

9. Process as defined in claim 8, **characterized in that** during the transfer of the vehicle bodies (110) from the standard position into the headfirst position by means of a turning device (112) both contact surfaces (144, 146) of the skid runners (142) abut on a respective, essentially flat supporting surface (230, 232) of the turning device (112).

10. Process as defined in claim 9, **characterized in that** at least one of the supporting surfaces (230, 232) of the turning device (112) is designed as a common tangential plane of the support members (224) of the support rollers (212, 214) of a roller conveyor (220, 222).

11. Process as defined in claim 10, **characterized in that** both supporting surfaces (230, 232) of the turning device (112) are each designed as common tangential planes of the support members (224) of the support rollers (212, 214) of a respective roller conveyor (220, 222).

12. Process as defined in any one of claims 6 to 11, **characterized in that** the skid runners (142) of the skid frames (108) are conveyed over the treatment bath (126) above the level (330) of the treatment bath.

13. Process as defined in any one of claims 1 to 12, **characterized in that** the vehicle bodies (110) are suspended in the pendulums (116) of the pendulum conveyor (118) in the headfirst position.

14. Process as defined in any one of claims 1 to 13, **characterized in that** the pendulums (116) of the pendulum conveyor (118) are arranged completely above the vehicle bodies (110) suspended on the pendulums (116).

15. Process as defined in any one of claims 1 to 14, **characterized in that** the pendulums (116) of the pendulum conveyor (118) are conveyed over the treatment bath (126) above the level (330) of the treatment bath.

16. Process as defined in any one of claims 1 to 15, **characterized in that** the pendulums (116) of the pendulum conveyor (118) are conveyed by means of a one-strand conveyor means (120).

17. Process as defined in any one of claims 1 to 15, **characterized in that** the pendulums (116) of the pendulum conveyor (118) are conveyed by means of a two-strand conveyor means (120).

18. Process as defined in claim 17, **characterized in that** guideways (378) for the conveyor means (120) are arranged over the treatment bath (126).

19. Process as defined in claim 17, **characterized in that** guideways (378) for the conveyor means (120) are arranged above the treatment bath (126) and to the side next to it.

20. Process as defined in any one of claims 17 to 19, **characterized in that** each strand of the conveyor means (120) is arranged in a respective, closed conveyor means channel (396; 396').

21. Process as defined in claim 20, **characterized in that** the interior of the conveyor means channel (396) is maintained at an increased air pressure in comparison with the interior of a booth (123) containing the treatment bath (126).

22. Process as defined in any one of claims 1 to 21, **characterized in that** the treatment bath (126) is an electrophoretic paint bath and sill anodes (434) arranged above the path of the vehicle bodies (110) are used in the treatment bath (126).

23. Treatment device for the surface treatment of vehicle bodies, comprising a treatment bath (126) for the surface treatment of the vehicle bodies and a conveyor device for conveying vehicle bodies (110) through the treatment bath (126) for the surface treatment of the vehicle bodies,
wherein the conveyor device comprises a conveyor (118) introducing the vehicle bodies (110) into the treatment bath (126), conveying them through the treatment bath (126) and bringing them out of the treatment bath (126) again,
**characterized in that** the conveyor device comprises a transfer device for transferring the vehicle bodies (110) prior to their introduction into the treatment bath (126) from a standard position where window openings (174) of the respective vehicle body (110) are arranged above the floor pan (173) of the vehicle body (110) into a headfirst position where the window openings (174) of the respective vehicle body (110) are arranged beneath the floor pan (173) of the vehicle body (110), and that the conveyor (118) subsequently introduces the vehicle bodies (110) into the treatment bath (126), conveys them through the treatment bath (126) and brings them out of the treatment bath (126) again in the headfirst position, wherein the conveyor (118) is designed as a pendulum conveyor, the vehicle bodies (110) being conveyed through the treatment bath (126) suspended therefrom.

24. Treatment device as defined in claim 23, **characterized in that** the conveyor device (102) comprises an additional transfer device for transferring the vehicle bodies (110) back into the standard position after they have been brought out of the treatment bath (126).

25. Treatment device as defined in one of claims 23 or 24, **characterized in that** the transfer device transfers the vehicle bodies (110) into a headfirst position where the windscreen openings of the vehicle bodies (110) point forwards in the direction of conveyance (104).

26. Treatment device as defined in any one of claims 23 to 25, **characterized in that** the transfer device is designed as a turning device (112).

27. Treatment device as defined in claim 26, **characterized in that** the turning device (112) has an axis of rotation (204) aligned essentially at right angles to the direction of conveyance (104).

28. Treatment device as defined in any one of claims 23 to 27, **characterized in that** the conveyor device (102) conveys vehicle bodies (110) each arranged on a skid frame (108).

29. Treatment device as defined in claim 28, **characterized in that** the skid frames (108) are arranged above the vehicle bodies (110) in the headfirst position.

30. Treatment device as defined in one of claims 28 or 29, **characterized in that** the skid frames (108) comprise skid runners (142) each having two contact surfaces (144, 146) facing away from one another for supporting the skid frame (108) on an essentially flat supporting surface (230, 232) of a roller conveyor (220, 222).

31. Treatment device as defined in claim 30, **characterized in that** the transfer device is designed as a turning device (112) having a first supporting surface (230) and a second supporting surface (232), the skid runners (142) of the skid frames (108) abutting on said surfaces with a respective one of their contact surfaces (144, 146) during the transfer of the vehicle bodies (110) from the standard position into the headfirst position.

32. Treatment device as defined in claim 31, **characterized in that** the turning device (112) comprises at least one roller conveyor (220, 222), the support member apex lines of said roller conveyor defining one of the supporting surfaces (230, 232) of the turning device (112).

33. Treatment device as defined in claim 32, **characterized in that** the turning device (112) comprises two roller conveyors (220, 222), the support member apex lines of said roller conveyors defining the supporting surfaces (230, 232) of the turning device (112).

34. Treatment device as defined in any one of claims 28 to 33, **characterized in that** the skid runners (142) of the skid frames (108) are conveyed over the treatment bath (126) above the level (330) of the treatment bath.

35. Treatment device as defined in any one of claims 23 to 34, **characterized in that** the conveyor device (102) comprises a transfer station where the vehicle bodies (110) are suspended in the pendulums (116) of the pendulum conveyor in the headfirst position.

36. Treatment device as defined in any one of claims 23 or 35, **characterized in that** the pendulums (116) of the pendulum conveyor are arranged completely above the vehicle bodies (110) suspended from the pendulums (116).

37. Treatment device as defined in any one of claims 23 to 36, **characterized in that** the pendulums (116) of the pendulum conveyor are conveyed over the treatment bath (126) above the level (330) of the treatment bath.

38. Treatment device as defined in any one of claims 23 to 37, **characterized in that** the pendulum conveyor comprises a one-strand conveyor means (120).

39. Treatment device as defined in any one of claims 23 to 37, **characterized in that** the pendulum conveyor comprises a two-strand conveyor means (120).

40. Treatment device as defined in claim 39, **characterized in that** the pendulum conveyor comprises guideways (378) for the conveyor means (120) arranged over the treatment bath (126).

41. Treatment device as defined in claim 39, **characterized in that** the pendulum conveyor comprises guideways (378) for the conveyor means (120) arranged above the treatment bath (126) and to the side next to it.

42. Treatment device as defined in any one of claims 39 to 41, **characterized in that** each strand of the conveyor means (120) is arranged in a respective, closed conveyor means channel (396; 396').

43. Treatment device as defined in claim 42, **characterized in that** the interior of the conveyor means channel (396; 396') is maintained at an increased air pressure in comparison with the interior of a booth (123) containing the treatment bath (126).

44. Treatment device as defined in any one of claims 23 to 43, **characterized in that** the treatment bath (126) is designed as an electrophoretic paint bath and sill anodes (434) are arranged in the treatment bath (126) above the path of the vehicle bodies (110).

## Revendications

1. Procédé de convoyage de carrosseries de véhicules (110) au travers d'un bain de traitement (126), pour le traitement de surface des carrosseries de véhicules, **caractérisé en ce qu'**avant d'être plongées dans le bain de traitement (126), les carrosseries de véhicules (110) sont passées d'une position standard où les ouvertures de fenêtres (174) de chaque carrosserie de véhicule (110) sont disposées au-dessus du groupe de plancher (173) de la carrosserie de véhicule (110) à une position renversée où les ouvertures de fenêtres (174) de chaque carrosserie de véhicule (110) sont disposées en-dessous du groupe de plancher (173) de la carrosserie de véhicule (110), et **en ce que** les carrosseries de véhicules (110) sont ensuite plongées en position renversée dans le bain de traitement (126), convoyées au travers du bain de traitement (126) en étant suspendues à un convoyeur à balanciers (118) et ressorties du bain de traitement (126).

2. Procédé selon la revendication 1, **caractérisé en ce que** les carrosseries de véhicules (110) sont ramenées en position standard après la sortie du bain de traitement (126).

3. Procédé selon l'une des revendications 1 ou 2, **caractérisé en ce qu'**en position renversée des carrosseries de véhicules (110), les ouvertures de pare-brise avant des carrosseries de véhicules (110) sont dirigées vers l'avant dans le sens de convoyage (104).

4. Procédé selon l'une des revendications 1 à 3, **caractérisé en ce que** les carrosseries de véhicules (110) sont passées de la position standard à la position renversée par une rotation, de préférence par une rotation de quelque 180 °.

5. Procédé selon la revendication 4, **caractérisé en ce que** les carrosseries de véhicules (110) sont passées de la position standard à la position renversée par une rotation autour d'un axe de rotation (204) orienté sensiblement perpendiculairement au sens de convoyage (104).

6. Procédé selon l'une des revendications 1 à 5, **caractérisé en ce que** les carrosseries de véhicules (110) sont disposées chacune contre un cadre-support (108).

7. Procédé selon la revendication 6, **caractérisé en ce que** les cadres-supports (108) sont disposés au-dessus des carrosseries de véhicules (110) en position renversée.

8. Procédé selon l'une des revendications 6 ou 7, **caractérisé en ce que** des cadres-supports (108) sont utilisés, dont les patins (142) présentent chacun deux surfaces d'appui (144, 146) éloignées l'une de l'autre pour l'appui du cadre-support (108) sur une surface d'appui (230, 232) sensiblement plane d'un convoyeur à galets (220, 222).

9. Procédé selon la revendication 8, **caractérisé en ce que** lors du passage des carrosseries de véhicules (110) de la position standard à la position renversée au moyen d'un dispositif de rotation (112), les deux surfaces d'appui (144, 146) des patins (142) reposent chacune sur une surface d'appui (230, 232) sensiblement plane du dispositif de rotation (112).

10. Procédé selon la revendication 9, **caractérisé en ce qu'**au moins une des surfaces d'appui (230, 232) du dispositif de rotation (112) est réalisée comme plan tangentiel commun aux corps de support (224) des galets-supports (212, 214) d'un convoyeur à galets (220, 222).

11. Procédé selon la revendication 10, **caractérisé en ce que** les deux surfaces d'appui (230, 232) du dispositif de rotation (112) sont réalisées comme plans tangentiels communs aux corps de support (224) des galets-supports (212, 214) d'un convoyeur à galets (220, 222) respectif.

12. Procédé selon l'une des revendications 6 à 11, **caractérisé en ce que** les patins (142) des cadres-supports (108) sont convoyés sur le bain de traitement (126) au-dessus du niveau du bain de traitement (330).

13. Procédé selon l'une des revendications 1 à 12, **caractérisé en ce que** les carrosseries de véhicules (110) en position renversée sont accrochées aux balanciers (116) du convoyeur à balanciers (118).

14. Procédé selon l'une des revendications 1 à 13, **caractérisé en ce que** les balanciers (116) du convoyeur à balanciers (118) sont disposés entièrement au-dessus des carrosseries de véhicules (110) accrochées aux balanciers (116).

15. Procédé selon l'une des revendications 1 à 14, **caractérisé en ce que** les balanciers (116) du convoyeur à balanciers (118) sont convoyés sur le bain de traitement (126) au-dessus du niveau du bain de traitement (330).

16. Procédé selon l'une des revendications 1 à 15, **caractérisé en ce que** les balanciers (116) du convoyeur à balanciers (118) sont convoyés à l'aide d'un moyen de convoyage (120) monocaténaire.

17. Procédé selon l'une des revendications 1 à 15, **caractérisé en ce que** les balanciers (116) du convoyeur à balanciers (118) sont convoyés à l'aide d'un moyen de convoyage (120) bicaténaire.

18. Procédé selon la revendication 17, **caractérisé en ce que** des glissières (378) pour le moyen de convoyage (120) sont disposées sur le bain de traitement (126).

19. Procédé selon la revendication 17, **caractérisé en ce que** des glissières (378) pour le moyen de convoyage (120) sont disposées au-dessus du bain de traitement (126) et latéralement à celui-ci.

20. Procédé selon l'une des revendications 17 à 19, **caractérisé en ce que** chaque chaîne du moyen de convoyage (120) est disposée dans un canal de moyen de convoyage (396; 396') fermé correspondant.

21. Procédé selon la revendication 20, **caractérisé en ce que** l'intérieur du canal de moyen de convoyage (396) présente une pression d'air maintenue supérieure à celle de l'intérieur d'une cabine (123) contenant le bain de traitement (126).

22. Procédé selon l'une des revendications 1 à 21, **caractérisé en ce que** le bain de traitement (126) est un bain de peinture électrophorétique et que des anodes en longerons (434) sont utilisées dans le bain de traitement (126) au-dessus de la voie des carrosseries de véhicules (110).

23. Système de traitement pour le traitement de surface de carrosseries de véhicules, comprenant un bain de traitement (126) pour le traitement de surface des carrosseries de véhicules et un dispositif de convoyage pour le convoyage des carrosseries de véhicules (110) au travers du bain de traitement (126) pour le traitement de surface des carrosseries de véhicules, le dispositif de convoyage comprenant un convoyeur (118) plongeant les carrosseries de véhicules (110) dans le bain de traitement (126), les convoyant au travers du bain de traitement (126) et les ressortant du bain de traitement (126),
**caractérisé**
**en ce que** le dispositif de convoyage comprend un dispositif de transfert, lequel fait passer les carrosseries de véhicules (110), avant que celles-ci soient plongées dans le bain de traitement (126), d'une position standard où les ouvertures de fenêtres (174) de chaque carrosserie de véhicule (110) sont disposées au-dessus du groupe de plancher (173) de la carrosserie de véhicule (110) à une position renversée où les ouvertures de fenêtres (174) de chaque carrosserie de véhicule (110) sont disposées en-dessous du groupe de plancher (173) de la carrosserie de véhicule (110), et en ce que le convoyeur (118) plonge ensuite les carrosseries de véhicules (110) en position renversée dans le bain de traitement (126), les convoie au travers du bain de traitement (126) et les ressort du bain de traitement (126), le convoyeur (118) étant réalisé comme convoyeur à balanciers auquel sont suspendues les carrosseries de véhicules (110) convoyées au travers du bain de traitement (126).

24. Système de traitement selon la revendication 23, **caractérisé en ce que** le dispositif de convoyage (102) comprend un autre dispositif de transfert, lequel ramène les carrosseries de véhicules (110) en position standard après la sortie du bain de traitement (126).

25. Système de traitement selon l'une des revendications 23 ou 24, **caractérisé en ce que** le dispositif de transfert fait passer les carrosseries de véhicules (110) dans une position renversée où les ouvertures de pare-brise avant des carrosseries de véhicules (110) sont dirigées vers l'avant dans le sens de convoyage (104).

26. Système de traitement selon l'une des revendications 23 à 25, **caractérisé en ce que** le dispositif de transfert est réalisé comme un dispositif de rotation (112).

27. Système de traitement selon la revendication 26, **caractérisé en ce que** le dispositif de rotation (112) présente un axe de rotation (204) orienté sensiblement perpendiculairement au sens de convoyage (104).

28. Système de traitement selon l'une des revendications 23 à 27, **caractérisé en ce que** le dispositif de convoyage (102) convoie des carrosseries de véhicules (110) disposées chacune contre un cadre-support (108).

29. Système de traitement selon la revendication 28, **caractérisé en ce que** les cadres-supports (108) sont disposés au-dessus des carrosseries de véhicules (110) en position renversée.

30. Système de traitement selon l'une des revendications 28 ou 29, **caractérisé en ce que** les cadres-supports (108) comprennent des patins (142) présentant chacun deux surfaces d'appui (144, 146) éloignées l'une de l'autre pour l'appui du cadre-support (108) sur une surface d'appui (230, 232) sensiblement plane d'un convoyeur à galets (220, 222).

31. Système de traitement selon la revendication 30, **caractérisé en ce que** le dispositif de transfert est réalisé comme un dispositif de rotation (112) présentant une première surface d'appui (230) et une deuxième surface d'appui (232) sur lesquelles reposent les patins (142) des cadres-supports (108) par une de leurs surfaces d'appui (144, 146) chacun, lors du passage des carrosseries de véhicules (110) de la position standard à la position renversée.

32. Système de traitement selon la revendication 31, **caractérisé en ce que** le dispositif de rotation (112) comprend au moins un convoyeur à galets (220, 222) dont les sommets de corps de support définissent une des surfaces d'appui (230, 232) du dispositif de rotation (112).

33. Système de traitement selon la revendication 32, **caractérisé en ce que** le dispositif de rotation (112) comprend deux convoyeurs à galets (220, 222) dont les sommets de corps de support définissent les surfaces d'appui (230, 232) du dispositif de rotation (112).

34. Système de traitement selon l'une des revendications 28 à 33, **caractérisé en ce que** les patins (142) des cadres-supports (108) sont convoyés sur le bain de traitement (126) au-dessus du niveau du bain de traitement (330).

35. Système de traitement selon l'une des revendications 23 à 34, **caractérisé en ce que** le dispositif de convoyage (102) comprend une station de transfert où les carrosseries de véhicules (110) en position renversée sont accrochées aux balanciers (116) du convoyeur à balanciers.

36. Système de traitement selon l'une des revendications 23 à 35, **caractérisé en ce que** les balanciers (116) du convoyeur à balanciers (118) sont disposés entièrement au-dessus des carrosseries de véhicules (110) accrochées aux balanciers (116).

37. Système de traitement selon l'une des revendications 23 à 36, **caractérisé en ce que** les balanciers (116) du convoyeur à balanciers (118) sont convoyés sur le bain de traitement (126) au-dessus du niveau du bain de traitement (330).

38. Système de traitement selon l'une des revendications 23 à 37, **caractérisé en ce que** le convoyeur à balanciers comprend un moyen de convoyage (120) monocaténaire.

39. Système de traitement selon l'une des revendications 23 à 37, **caractérisé en ce que** le convoyeur à balanciers comprend un moyen de convoyage (120) bicaténaire.

40. Système de traitement selon la revendication 39, **caractérisé en ce que** le convoyeur à balanciers comprend des glissières (378) pour le moyen de convoyage (120) disposées sur le bain de traitement (126).

41. Système de traitement selon la revendication 39, **caractérisé en ce que** le convoyeur à balanciers comprend des glissières (378) pour le moyen de convoyage (120) disposées au-dessus du bain de traitement (126) et latéralement à celui-ci.

42. Système de traitement selon l'une des revendications 39 à 41, **caractérisé en ce que** chaque chaîne du moyen de convoyage (120) est disposée dans un canal de moyen de convoyage (396 ; 396') fermé correspondant.

43. Système de traitement selon la revendication 42, **caractérisé en ce que** l'intérieur du canal de moyen de convoyage (396 ; 396') présente une pression d'air maintenue supérieure à celle de l'intérieur d'une cabine (123) contenant le bain de traitement (126).

44. Système de traitement selon l'une des revendications 23 à 43, **caractérisé en ce que** le bain de traitement (126) est réalisé comme un bain de peinture électrophorétique et que des anodes en longerons (434) sont utilisées dans le bain de traitement (126) au-dessus de la voie des carrosseries de véhicules (110).
